# EUROPEAN PATENT APPLICATION

(11) **EP 4 644 726 A1**
(43) Date of publication of application: **05.11.2025**
(21) Application number: 23909822.1
(22) Date of filing: 23.11.2023
(51) Int. Cl.: F16F 9/34, F16F 9/44, B60G 13/08

(54) **SHOCK ABSORBER AND VEHICLE HAVING SAME**

(30) Priority: 27.12.2022 CN 202211687311
(71) Applicant: BYD Company Limited, Shenzhen, Guangdong 518118 (CN)
(72) Inventor: TANG, Jianguo, Shenzhen, Guangdong 518118 (CN); JIN, Qibin, Shenzhen, Guangdong 518118 (CN); CHEN, Chaonan, Shenzhen, Guangdong 518118 (CN); LU, Yinbo, Shenzhen, Guangdong 518118 (CN); LUO, Yongpan, Shenzhen, Guangdong 518118 (CN); TANG, Haijian, Shenzhen, Guangdong 518118 (CN)
(74) Representative: Mathys & Squire
(86) International application number: PCT/CN2023/133679
(87) International publication number: WO 2024/139890

(57) **Abstract**

A shock absorber (1) and a vehicle (2) having same. The shock absorber (1) comprises a cylinder (100), a piston (200), a flow regulating valve (300), a valve core (400), and a pilot valve (500). The piston (200) is movably provided in the cylinder ( 100), and the piston (200) divides the cylinder (100) into a compression chamber(101) and a rebound chamber (102); the flow regulating valve (300) is provided in the piston (200) and separately communicated with the compression chamber ( 101) and the rebound chamber (102); the valve core (400) is movably provided in the piston (200), the pilot valve (500) is connected to the valve core (400), and when the valve core (400) moves, the flow regulating valve (300) is controlled by means of the pilot valve (500); the shock absorber (1) is provided with a first air channel (410) and a second air channel (420), the first air channel (410) is communicated with spaces on two sides of the moving direction of the valve core (400) and communicated with the rebound chamber(102), the second air channel (420) is communicated with the spaces on two sides of the moving direction of the valve core (400) and provided in the valve core (400), a part of the first air channel (410) is provided in the valve core (400), and the other part of the first air channel (410) is provided in the pilot valve (500). The shock absorber (1) has the advantages of high integration, few parts, easy assembly, and low machining costs.

## Description

### CROSS-REFERENCE TO RELATED APPLICATIONS

The present disclosure claims priority to Chinese Patent Application No. 202211687311.0, entitled "SHOCK ABSORBER AND VEHICLE HAVING SAME" and filed on December 27, 2022. The entire content of the above-referenced application is incorporated herein by reference.

### FIELD

The present disclosure relates to the technical field of shock absorbers, and more specifically, to a shock absorber and a vehicle having same.

### BACKGROUND

In the related technology, a shock absorber in an automobile mainly includes a spring, a piston, a piston rod, and a cylinder. When the automobile passes through an uneven road surface, the spring vibrates back and forth after absorbing vibration, and a main function of the shock absorber is to suppress the reciprocating vibration of the spring. However, if the shock absorber appears to be too soft, a vehicle body will vibrate up and down. If the shock absorber appears to be too stiff, excessive resistance may be caused.

In the related technology, usually, after the damping of the shock absorber is adjusted, the shock absorber is installed. However, because the road surfaces where automobiles travel are complex, when the automobiles travel at a high speed, the shock absorber is required to be relatively stiff to provide relatively large damping so as to prevent vehicle body instability due to the influence of wind resistance. When the automobiles travel on an uneven road surface, the shock absorber is required to be relatively soft to provide relatively low damping so as to fully absorb vibration caused by the uneven road surface. Although the damping of the shock absorber in the related art is adjustable, the shock absorber has numerous parts, low integration, and an inefficient space utilization rate, causing a problem that the shock absorber has a large volume and is difficult to assemble.

### SUMMARY

The present disclosure aims to resolve at least one of the technical problems existing in the related art. Therefore, an objective of the present disclosure is to provide a shock absorber, which has the advantages of a high level of integration, few parts, easy assembly, and low machining costs.

The present disclosure further provides a vehicle having the above-mentioned shock absorber.

According to a first aspect, an embodiment of the present disclosure provides a shock absorber, including: a cylinder, a piston, a flow regulating valve, a valve core, and a pilot valve. The piston is movably arranged in the cylinder, and the piston divides an interior of the cylinder into a compression chamber and a rebound chamber. The flow regulating valve is arranged in the piston and in communication with the compression chamber and the rebound chamber, respectively. The valve core is movably arranged in the piston. The pilot valve is connected to the valve core. When the valve core moves, the flow regulating valve is controlled by the pilot valve, so as to regulate a flow rate of a fluid between the compression chamber and the rebound chamber. The shock absorber is configured with a first air channel and a second air channel, the first air channel is in communication with spaces on two sides of a moving direction of the valve core and in communication with the rebound chamber, the second air channel is in communication with the spaces on the two sides of the moving direction of the valve core, one part of the first air channel is configured in the valve core, another part is configured in the pilot valve, and the second air channel is configured in the valve core.

The shock absorber according to the embodiment of the present disclosure has the advantages of few parts, a high level of integration, a high space utilization rate, easy assembly, and low machining costs.

According to some embodiments of the present disclosure, the shock absorber further includes: a first one-way valve and a second one-way valve. The first one-way valve is arranged in the first air channel, allowing gas to flow only from the first air channel to a direction close to the flow regulating valve. The second one-way valve is arranged in the second air channel, allowing the gas to flow only from the second air channel to a direction away from the flow regulating valve.

According to some embodiments of the present disclosure, the first one-way valve includes: a first channel member, a first closure member, and a first return elastic member. The first channel member is installed in the first air channel and provided with a first channel. The first closure member is movably installed in the first air channel and located at an end, facing the flow regulating valve, of the first channel member. The first return elastic member is installed in the first air channel and two ends abut against an inner wall surface of the first air channel and the first closure member, respectively, so that the first closure member abuts against the first channel member and closes the first channel.

According to some embodiments of the present disclosure, the inner wall surface of the first air channel is provided with a first support ring table, the first support ring table is located at an end, facing the flow regulating valve, of the first closure member, and the two ends of the first return elastic member abut against the first support ring table and the first closure member, respectively.

According to some embodiments of the present disclosure, the second one-way valve includes: a second channel member, a second closure member, and a second return elastic member. The second channel member is installed in the second air channel and provided with a second channel. The second closure member is movably installed in the second air channel and located at an end, facing the flow regulating valve, of the second channel member. An inner wall surface of the second air channel is provided with a second support ring table, and the second support ring table is located at an end, facing away from the second channel member, of the second closure member. The second return elastic member is installed in the second air channel and two ends abut against the second channel member and the second closure member, respectively, so that the second closure member abuts against the second support ring table and closes the second air channel.

According to some embodiments of the present disclosure, the part, configured in the valve core, of the first air channel includes: a first axial central segment, a first radial segment, and a first axial off-center segment. The first axial central segment extends along an axial direction of the valve core, and a central axis of the first axial central segment coincides with a central axis of the valve core. The first radial segment extends along a radial direction of the valve core, one end of the first radial segment is in communication with an end, away from the flow regulating valve, of the first axial central segment, and another end of the first radial segment penetrates through an outer peripheral surface of the valve core. The first axial off-center segment extends along the axial direction of the valve core, a central axis of the first axial off-center segment does not coincide with the central axis of the valve core, and an end, adjacent to the flow regulating valve, of the first axial off-center segment is in communication with the first radial segment.

According to some embodiments of the present disclosure, the part, configured in the pilot valve, of the first air channel includes: a second axial central segment and a second radial segment. The second axial central segment extends along an axial direction of the pilot valve, a central axis of the second axial central segment coincides with a central axis of the pilot valve, and an end, away from the flow regulating valve, of the axial central segment is in communication with the first axial central segment. The second radial segment extends along a radial direction of the pilot valve, one end of the second radial segment is in communication with an end, adjacent to the flow regulating valve, of the second axial central segment, and another end of the second radial segment is in communication with the rebound chamber.

According to some embodiments of the present disclosure, the second air channel includes: a third axial off-center segment, a third radial segment, and a third axial central segment. The third axial off-center segment extends along the axial direction of the valve core, and a central axis of the third axial off-center segment does not coincide with the central axis of the valve core. The third radial segment extends along the radial direction of the valve core, one end of the third radial segment is in communication with an end, away from the flow regulating valve, of the third axial off-center segment, and another end of the third radial segment penetrates through the outer peripheral surface of the valve core. The third axial central segment extends along the axial direction of the valve core, a central axis of the third axial central segment coincides with the central axis of the valve core, and an end, adjacent to the flow regulating valve, of the third axial central segment is in communication with the third radial segment.

According to some embodiments of the present disclosure, the shock absorber further includes: a first elastic member and a second elastic member. The first elastic member and the second elastic member are arranged on the two sides of the moving direction of the valve core, respectively, and the first elastic member and the second elastic member jointly apply an elastic force to the valve core to keep a position of the valve core stable.

According to some embodiments of the present disclosure, an end, facing the first elastic member, of the valve core is provided with a first ring slot, the first elastic member is a spring, and the first elastic member is inserted into the first ring slot. An end, facing the second elastic member, of the valve core is provided with a second ring slot, the second elastic member is a spring, and the second elastic member is inserted into the second ring slot.

According to some embodiments of the present disclosure, the first air channel is in communication with the first ring slot, and the second ring slot surrounds the first air channel and is separated from the first air channel. The second air channel is in communication with the second ring slot, and the first ring slot surrounds the second air channel and is separated from the second air channel.

According to some embodiments of the present disclosure, the piston includes: a piston rod and a piston valve body. The piston valve body divides the interior of the cylinder into the compression chamber and the rebound chamber. The piston valve body and the piston rod are connected by a valve body, the flow regulating valve is installed in the valve body, and the pilot valve extends into the valve body to match with the flow regulating valve.

According to some embodiments of the present disclosure, the valve body is provided with a third air channel, a side wall of the piston rod is provided with a fourth air channel, and the first air channel is in communication with the rebound chamber sequentially through the third air channel and the fourth air channel.

According to some embodiments of the present disclosure, an inner wall surface of the valve body is provided with a first limiting boss, the first limiting boss is located between the flow regulating valve and the valve core and surrounds the pilot valve so as to limit a moving path of the pilot valve, and at least a part of the third air channel is configured in the first limiting boss.

According to some embodiments of the present disclosure, the first air channel penetrates through the part, extending into the valve body, of the pilot valve, one end of the third air channel penetrates through a side surface, facing the flow regulating valve, the first limiting boss, and another end of the third air channel penetrates through an outer side surface of the valve body.

According to some embodiments of the present disclosure, the shock absorber further includes: a coil component and a hood body. The coil component is installed in the piston rod. The hood body is installed on the coil component, and the valve core is movably installed in the hood body. When the coil component is powered on, the valve core is magnetized and the valve core and the valve body are attracted to each other.

According to some embodiments of the present disclosure, an inner wall surface of the hood body is provided with a second limiting protrusion, an outer wall surface of the valve core is provided with a third limiting boss, and the second limiting boss and the third limiting boss does not abut against each other, so as to define a farthest position of the valve core relative to the flow regulating valve.

According to some embodiments of the present disclosure, the shock absorber further includes: a magnetic barrier ring. The magnetic barrier ring is installed in the piston rod, and the magnetic barrier ring is located between the hood body and the valve body and separates the coil component and the valve body.

According to some embodiments of the present disclosure, an end, facing the valve body, of the magnetic barrier ring is provided with a positioning slot, the positioning slot penetrates through an inner peripheral surface of the magnetic barrier ring, an end, facing the magnetic barrier ring, of the valve body is provided with a positioning protrusion, and the positioning protrusion is matched with the positioning slot.

According to some embodiments of the present disclosure, an outer diameter of a cross section of the positioning protrusion gradually decreases in a direction close to the magnetic barrier ring, and a cross-sectional area of the positioning slot gradually decreases in a direction away from the valve body.

According to some embodiments of the present disclosure, an end, facing the valve core, of the valve body is provided with a limiting slot, and the valve core may be inserted into the limiting slot.

According to some embodiments of the present disclosure, the coil component includes: a holder, a coil, a guide wire, and an insulating cover. The holder sleeves the hood body and an outer side wall of the holder is provided with a coil slot, an end, facing away from the valve body, of the holder is configured with a guide wire table, and the guide wire table is configured with a guide wire slot. The coil is wound in the coil slot. The guide wire is connected to the coil, and the guide wire is led out through the guide wire slot from an end, facing away from the valve body, of the holder. The insulating cover is installed on the guide wire table and seals and covers the guide wire slot.

According to some embodiments of the present disclosure, the coil component further includes: a metal cap. The metal cap is installed at an end, facing away from the valve body, of the holder and in contact with the hood body. The metal cap is configured with a notch. The guide wire table is matched with the notch.

According to some embodiments of the present disclosure, the flow regulating valve includes: an overflow valve body and an overflow valve seat. The overflow valve body is movably installed in the valve body. The overflow valve seat is installed in the valve body and located at an end, facing away from the pilot valve, of the overflow valve body, the overflow valve seat is provided with a first flow channel and a second flow channel, each of the first flow channel and the second flow channel is in communication with the compression chamber and the rebound chamber, respectively, and a minimum cross-sectional area of the first flow channel is greater than a minimum cross-sectional area of the second flow channel. When the valve core moves, the overflow valve body is controlled to move by the pilot valve to open or close the first flow channel by using the overflow valve body.

According to some embodiments of the present disclosure, an overflow chamber in communication with the compression chamber is configured in the overflow valve seat; an end, facing the overflow valve body, of the overflow valve seat is provided with a first through hole; a side wall of the overflow valve seat is provided with a second through hole; the overflow chamber is in communication with the rebound chamber through the first through hole and the second through hole; a cross-sectional area of the first through hole is greater than a cross-sectional area of the second through hole; the overflow chamber and the first through hole form the first flow channel; and the overflow chamber and the second through hole form the second flow channel. The overflow valve body opens or closes the first flow channel by opening or closing the first through hole.

According to some embodiments of the present disclosure, an end, facing the overflow valve seat, of the overflow valve body is provided with a ring slot, an outer peripheral wall of the ring slot closes the first flow channel through contact with the overflow valve seat, and the outer peripheral wall of the ring slot opens the first flow channel through separation from the overflow valve seat.

According to some embodiments of the present disclosure, the shock absorber further includes: a third elastic member. An end, facing the overflow valve body, of the overflow valve seat is provided with a support portion, the third elastic member is a spring sleeving an inner side wall of the ring slot, two ends of the third elastic member abut against the support portion and a bottom wall of the ring slot, respectively, and the third elastic member provides an elastic force for pushing the outer peripheral wall of the ring slot to separate from the overflow valve seat.

According to some embodiments of the present disclosure, a central chamber and a ring chamber are defined between an end, facing away from the overflow valve seat, of the overflow valve body and the valve body, and the ring chamber is provided around the central chamber. The overflow valve body is provided with a third flow channel and a fourth flow channel, the third flow channel is in communication with the rebound chamber, the ring chamber, and the central chamber, respectively, and the fourth flow channel is in communication with the first flow channel and the central chamber, respectively. The pilot valve extends into the central chamber and controls whether the central chamber is in communication with the third flow channel.

According to some embodiments of the present disclosure, an end, facing away from the overflow valve seat, of the overflow valve body is provided with a first sealing ring table, the valve body is provided with a second sealing ring table, one of the first sealing ring table and the second sealing ring table is matched inside another one, and the first sealing ring table and the second sealing ring table jointly separate the central chamber and the ring chamber.

According to some embodiments of the present disclosure, the third flow channel includes: a radial flow channel, an axial central flow channel, and an axial off-center flow channel. The radial flow channel extends along a radial direction of the overflow valve body, and the radial flow channel is in communication with the rebound chamber. The axial central flow channel extends along an axial direction of the overflow valve body, and the radial flow channel is in communication with the central chamber through the axial central flow channel. The axial off-center flow channel extends along the axial direction of the overflow valve body, and the radial flow channel is in communication with the ring chamber through the axial off-center flow channel. The pilot valve extends into the central chamber and opens and closes the axial central flow channel.

According to some embodiments of the present disclosure, a side wall of the valve body is provided with a second through hole, and the second through hole is in communication with the rebound chamber; an inner peripheral surface of the valve body is provided with a flow channel ring slot in communication with a first through hole; the flow channel ring slot is closed by on an outer peripheral surface of the overflow valve body; and the third flow channel is in communication with the rebound chamber sequentially through the flow channel ring slot and the second through hole.

According to some embodiments of the present disclosure, the shock absorber further includes: an insert. The insert is installed in the piston valve body and located at an end, facing away from the pilot valve, of the flow regulating valve. The insert is provided with a first insert flow channel and a second insert flow channel. The flow regulating valve is in communication with the compression chamber by the first insert flow channel and the second insert flow channel. When the fluid flows from the flow regulating valve to the compression chamber, a maximum flow velocity of the fluid in the first insert flow channel is greater than a maximum flow velocity of the fluid in the second insert flow channel. When the fluid flows from the compression chamber to the flow regulating valve, the maximum flow velocity of the fluid in the second insert flow channel is greater than the maximum flow velocity of the fluid in the first insert flow channel.

According to some embodiments of the present disclosure, the first insert flow channel includes: a first perforation and a first throttling hole. The first perforation penetrates through the insert, and one end of the first perforation is in communication with the flow regulating valve. A side, facing away from the flow regulating valve, of the insert is provided with a first convex edge, the first convex edge surrounds the first perforation, the first throttling hole is formed in the first convex edge, a cross-sectional area of the first perforation is greater than a cross-sectional area of the first throttling hole, and another end of the first perforation is in communication with the flow regulating valve through the first throttling hole. An end, facing away from the flow regulating valve, of the insert is provided with a first spring plate, and the first spring plate abuts against the first convex edge and seals and covers the first perforation.

According to some embodiments of the present disclosure, the second insert flow channel includes: a second perforation and a second throttling hole. The second perforation penetrates through the insert, and one end of the second perforation is in communication with the compression chamber. A side, facing the flow regulating valve, of the insert is provided with a second convex edge, the second convex edge surrounds the second perforation, the second throttling hole is formed in the second convex edge, a cross-sectional area of the second perforation is greater than a cross-sectional area of the second throttling hole, and another end of the second perforation is in communication with the flow regulating valve through the second throttling hole. A side, facing the flow regulating valve, of the insert is provided with a second spring plate, and the second spring plate abuts against the second convex edge and seals and covers the second perforation.

According to some embodiments of the present disclosure, the shock absorber further includes: a compression valve plate and an adjusting sheet. The compression valve plate abuts against an end, facing the insert, of the flow regulating valve. The adjusting sheet is sandwiched between the compression valve plate and the second spring plate, and an inner diameter of the adjusting sheet is greater than an inner diameter of the second spring plate.

According to some embodiments of the present disclosure, the shock absorber further includes: a bottom valve. The cylinder includes an outer cylinder and an inner cylinder. The inner cylinder extends into the outer cylinder, and a liquid storage chamber is formed between the outer cylinder and the inner cylinder. The piston is movably arranged in the inner cylinder and divides an interior of the inner cylinder into the compression chamber and the rebound chamber. The bottom valve is installed in at least one of the inner cylinder and the outer cylinder, and the bottom valve is provided with a first one-way flow channel and a second one-way flow channel. The fluid in the compression chamber flows into the liquid storage chamber through the first one-way flow channel, and the fluid in the liquid storage chamber flows into the compression chamber through the second one-way flow channel.

According to a second aspect, an embodiment of the present disclosure provides a vehicle, including: a shock absorber according to the embodiment of the first aspect of the present disclosure.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic structural view of a shock absorber according to an embodiment of the present disclosure.
FIG. 2 is a partially enlarged view of region A in FIG. 1.
FIG. 3 is a partially enlarged view of region B in FIG. 1.
FIG. 4 is a schematic structural view of a valve core of the shock absorber according to the embodiment of the present disclosure.
FIG. 5 is a schematic structural view of the valve core of the shock absorber according to the embodiment of the present disclosure at another viewing angle.
FIG. 6 is a sectional view of the valve core of the shock absorber according to the embodiment of the present disclosure.
FIG. 7 is a sectional view of a pilot valve of the shock absorber according to the embodiment of the present disclosure.
FIG. 8 is a schematic structural view of a valve body of the shock absorber according to the embodiment of the present disclosure.
FIG. 9 is a sectional view of the valve body of the shock absorber according to the embodiment of the present disclosure.
FIG. 10 is a sectional view of a hood body of the shock absorber according to the embodiment of the present disclosure.
FIG. 11 is a schematic structural view of a holder of the shock absorber according to the embodiment of the present disclosure.
FIG. 12 is a schematic structural view of a metal cap of the shock absorber according to the embodiment of the present disclosure.
FIG. 13 is a schematic structural view of a magnetic barrier ring of the shock absorber according to the embodiment of the present disclosure.
FIG. 14 is a schematic structural view of an overflow valve seat of the shock absorber according to the embodiment of the present disclosure.
FIG. 15 is a schematic structural view of the overflow valve seat of the shock absorber according to the embodiment of the present disclosure at another viewing angle.
FIG. 16 is a sectional view of the overflow valve seat of the shock absorber according to the embodiment of the present disclosure.
FIG. 17 is a schematic structural view of an overflow valve body of the shock absorber according to the embodiment of the present disclosure.
FIG. 18 is a schematic structural view of the overflow valve body of the shock absorber according to the embodiment of the present disclosure at another viewing angle.
FIG. 19 is a sectional view of the overflow valve body of the shock absorber according to the embodiment of the present disclosure.
FIG. 20 is a schematic structural view of an insert of the shock absorber according to the embodiment of the present disclosure.
FIG. 21 is a schematic structural view of the insert of the shock absorber according to the embodiment of the present disclosure at another viewing angle.
FIG. 22 is a schematic block view of a vehicle according to an embodiment of the present disclosure.

### DETAILED DESCRIPTION

Embodiments of the present disclosure are described in detail below, and the embodiments described with reference to accompanying drawings are exemplary.

In the description of the present disclosure, it should be understood that the orientation or positional relationships indicated by the terms such as "central", "longitudinal", "transverse", "length", "width", "thickness", "upper", "lower", "front", "back", "left", "right", "vertical", "horizontal", "top", "bottom", "inside", "outside", "clockwise", "anticlockwise", "axial direction", "radial direction", "circumferential direction", etc., are the orientation or positional relationships shown based on the accompanying drawings, and are used only for ease and brevity of description of the present disclosure, rather than indicating or implying that the mentioned apparatus or element must have a particular orientation or must be configured and operated in a particular orientation. Therefore, such terms should not be construed as limitations on the present disclosure.

In the description of the present disclosure, "a number of" means two or more than two.

A shock absorber 1 according to an embodiment of the present disclosure is described below with reference to the accompanying drawings.

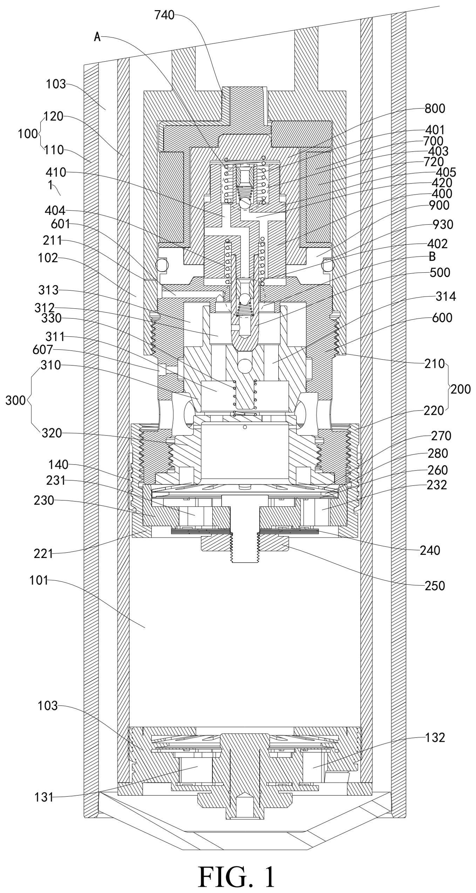

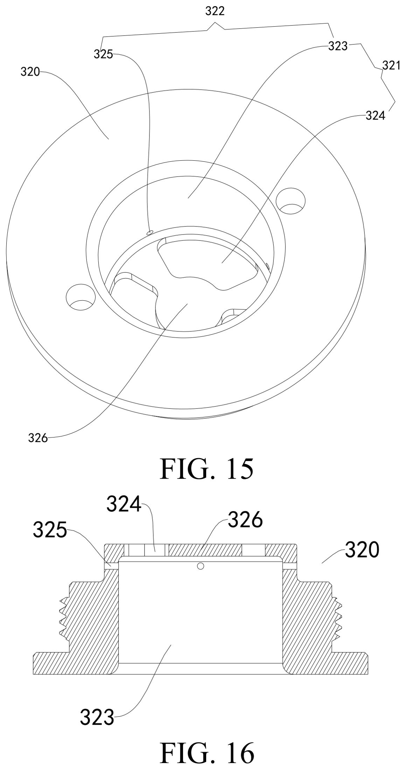

As shown in FIG. 1 to FIG. 21, the shock absorber 1 according to the embodiment of the present disclosure includes a cylinder 100, a piston 200, a flow regulating valve 300, a valve core 400, and a pilot valve 500.

The piston 200 is movably arranged in the cylinder 100, and the piston 200 divides an interior of the cylinder 100 into a compression chamber 101 and a rebound chamber 102. The flow regulating valve 300 is arranged in the piston 200 and in communication with the compression chamber 101 and the rebound chamber 102, respectively. The valve core 400 is movably arranged in the piston 200. The pilot valve 500 is connected to the valve core 400. When the valve core 400 moves, the flow regulating valve 300 is controlled by the pilot valve 500, so as to regulate a flow rate of a fluid between the compression chamber 101 and the rebound chamber 102.

The shock absorber 1 is configured with a first air channel 410 and a second air channel 420, the first air channel 410 is in communication with spaces on two sides of a moving direction of the valve core 400 and in communication with the rebound chamber 102, the second air channel 420 is in communication with the spaces on the two sides of the moving direction of the valve core 400, one part of the first air channel 410 is configured in the valve core 400, another part of the first air channel 410 is configured in the pilot valve 500, and the second air channel 420 is configured in the valve core 400.

For example, the fluid, such as, oil and an inactive gas having a particular pressure, may be stored in the compression chamber 101 and the rebound chamber 102.

In the shock absorber 1 according to the embodiment of the present disclosure, the piston 200 is movably arranged in the cylinder 100, and the piston 200 divides the interior of the cylinder 100 into the compression chamber 101 and the rebound chamber 102. The flow regulating valve 300 is arranged in the piston 200 and in communication with the compression chamber 101 and the rebound chamber 102, respectively. In this way, when the piston 200 compresses volume of the compression chamber 101, volume of the rebound chamber 102 increases accordingly. In this case, the fluid in the compression chamber 101 flows to the rebound chamber 102 through the flow regulating valve 300. When the piston 200 compresses the volume of the rebound chamber 102, the volume of the compression chamber 101 increases accordingly. In this case, the fluid in the rebound chamber 102 flows to the compression chamber 101 through the flow regulating valve 300. In the above-mentioned process, a moving direction of the piston 200 is repeatedly changed, so that the fluid repeatedly flows between the compression chamber 101 and the rebound chamber 102, and friction between the fluid and the shock absorber 1 generates heat, so that kinetic energy of the piston 200 can be converted into thermal energy of the fluid, thereby reducing the power of the piston 200.

Thus, it can be known that when the cylinder 100 and the piston 200 of the shock absorber 1 are connected to two objects (for example, a vehicle frame and a wheel), respectively, and one of the two object vibrates, a vibration force can be transmitted onto another object due to existence of the shock absorber 1, thereby achieving a shock absorbing effect.

In addition, the valve core 400 is movably arranged in the piston 200, the pilot valve 500 is connected to the valve core 400, and when the valve core 400 moves, the flow regulating valve 300 is controlled by the pilot valve 500, so as to regulate the flow rate of the fluid between the compression chamber 101 and the rebound chamber 102. In this way, due to movement of the valve core 400, the flow rate of the fluid between the compression chamber 101 and the rebound chamber 102 can be controlled, so that when the valve core 400 moves by a same distance, the amount of heat generated by the fluid due to friction is different, so as to change the shock absorbing effect of the shock absorber 1.

In addition, the shock absorber 1 is configured with a first air channel 410 and a second air channel 420, the first air channel 410 is in communication with spaces on two sides of a moving direction of the valve core 400 and in communication with the rebound chamber 102, the second air channel 420 is in communication with the spaces on the two sides of the moving direction of the valve core 400, one part of the first air channel 410 is configured in the valve core 400, another part of the first air channel 410 is configured in the pilot valve 500, and the second air channel 420 is configured in the valve core 400.

By providing the first air channel 410 and the second air channel 420, air pressures in the spaces on the two sides of the moving direction of the valve core 400 can be balanced, so that the movement of the valve core 400 is more stable, and movement of the pilot valve 500 is more stable accordingly. In addition, because a part of the first air channel 410 and the whole second air channel 420 are configured in the valve core 400, other parts for providing air channels do not need to be assembled on the valve core 400, for example, a tubular column penetrating through the valve core 400 does not need to be provided, and air channels do not need to be provided in the tubular column. That is, an air channel that needs to pass through the valve core 400 is completely integrated by the valve core 400 itself. In this way, the number of parts can be reduced, the valve core 400 has a more efficient space utilization rate and a higher level of integration, and entire parts of the shock absorber 1 are fewer, so that assembling is easier and machining costs are lower.

According to some embodiments of the present disclosure, as shown in FIG. 1 to FIG. 3, the shock absorber 1 further includes a first one-way valve 430 and a second one-way valve 440. The first one-way valve 430 is arranged in the first air channel 410, allowing gas to flow only from the first air channel 410 to a direction close to the flow regulating valve 300. The second one-way valve 440 is arranged in the second air channel 420, allowing the gas to flow only from the second air channel 420 to a direction away from the flow regulating valve 300.

By providing the first one-way valve 430 and the second one-way valve 440, a flow rate and a flow direction of the gas in the first air channel 410 and the second air channel 420 can be controlled, so as to control air pressure balance on the two sides of the moving direction of the valve core 400, thereby ensuring stability of the moving direction of the valve core 400.

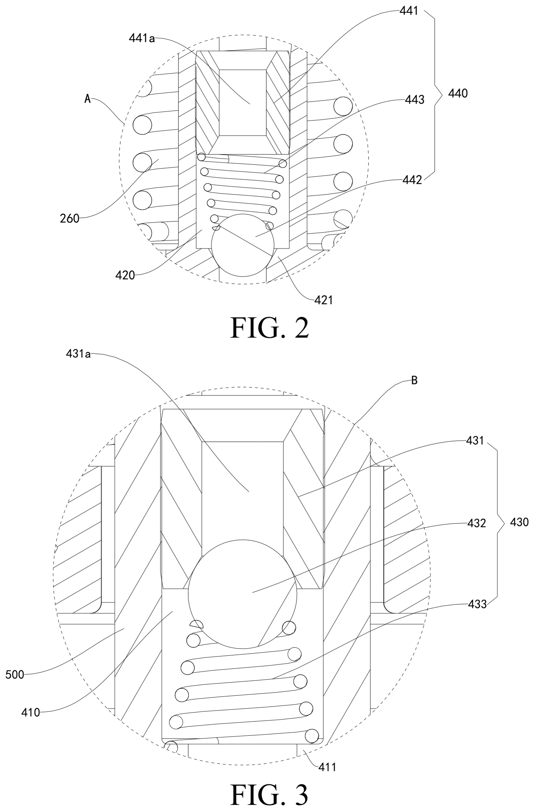

According to some embodiments of the present disclosure, as shown in FIG. 3, the first one-way valve 430 includes a first channel member 431, a first closure member 432, and a first return elastic member 433.

The first channel member 431 is installed in the first air channel 410 and provided with a first channel 431a. The first closure member 432 is movably installed in the first air channel 410 and located at an end, facing the flow regulating valve 300, of the first channel member 431. The first return elastic member 433 is installed in the first air channel 410 and two ends abut against an inner wall surface of the first air channel 410 and the first closure member 432, respectively, so that the first closure member 432 abuts against the first channel member 431 and closes the first channel 431a.

For example, the first closure member 432 may be a ball. When the gas flows to the direction close to the flow regulating valve 300, the first closure member 432 may be pushed to press the first return elastic member 433, so that the first channel 431a is opened, and normal flow of the gas in the first air channel 410 is ensured. When the gas stops flowing to the direction of the flow regulating valve 300, the first return elastic member 433 can push the first closure member 432 again to abut against the first channel member 431 and close the first channel 431a, so as to facilitate next use.

According to some embodiments of the present disclosure, as shown in FIG. 3, the inner wall surface of the first air channel 410 is provided with a first support ring table 411. The first support ring table 411 is located at an end, facing the flow regulating valve 300, of the first closure member 432. The two ends of the first return elastic member 433 abut against the first support ring table 411 and the first closure member 432, respectively. In this way, positioning of the first return elastic member 433 in the first air channel 410 is facilitated, so that positioning of the first closure member 432 and the first channel member 431 can also be implemented.

According to some embodiments of the present disclosure, as shown in FIG. 2, the second one-way valve 440 includes a second channel member 441, a second closure member 442, and a second return elastic member 443.

The second channel member 441 is installed in the second air channel 420 and provided with a second channel 441a. The second closure member 442 is movably installed in the second air channel 420 and located at an end, facing the flow regulating valve 300, of the second channel member 441. An inner wall surface of the second air channel 420 is provided with a second support ring table 421, and the second support ring table 421 is located at an end, facing away from the second channel member 441, of the second closure member 442. The second return elastic member 443 is installed in the second air channel 420 and two ends abut against the second channel member 441 and the second closure member 442, respectively, so that the second closure member 442 abuts against the second support ring table 421 and closes the second air channel 420.

For example, the second closure member 442 may be a ball. When the gas flows to the direction away from the flow regulating valve 300, the second closure member 442 may be pushed to press the second return elastic member 443, so that the second closure member 442 is away from the second support ring table 421, and the second air channel 420 is opened, thereby ensuring normal flow of the gas in the second air channel 420. When the gas stops flowing to the direction of the flow regulating valve 300, the second return elastic member 443 can push the second closure member 442 again to abut against the second support ring table 421 and close the second air channel 420, so as to facilitate next use.

According to some embodiments of the present disclosure, as shown in FIG. 1, the pilot valve 500 is movably installed at an end, facing the flow regulating valve 300, of the valve core 400. In this way, the pilot valve 500 is located between the valve core 400 and the flow regulating valve 300, so that not only can connections of the pilot valve 500 and the valve core 400 with the flow regulating valve 300 be ensured, but also length of the pilot valve 500 can be reduced, and costs and weight can be reduced. In addition, the pilot valve 500 is movable relative to the valve core 400, so that on one hand, venting can be facilitated and impacts on the valve core 400 are reduced, thereby ensuring movement stability; further, a constraint between the pilot valve 500 and the valve core 400 is eliminated, and a requirement on a machining process can be lowered, for example, a requirement on precision of the length of the pilot valve 500 is lowered, thereby avoiding impacts on assembly of the pilot valve 500 caused by a process error.

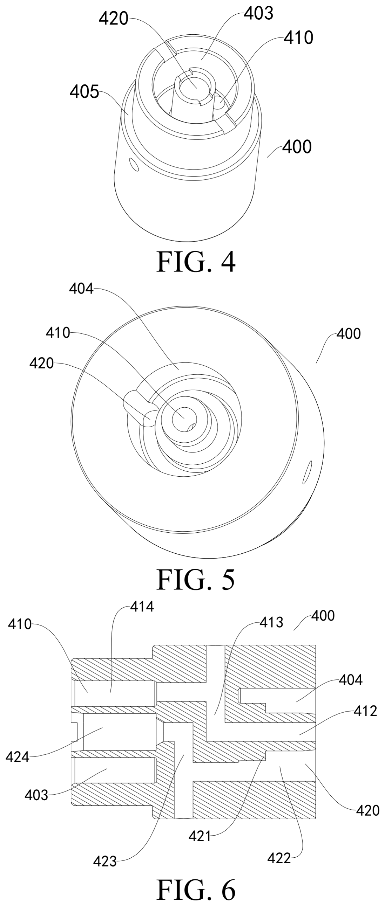

According to some embodiments of the present disclosure, as shown in FIG. 4 to FIG. 6, the part, configured in the valve core 400, of the first air channel 410 includes a first axial central segment 412, a first radial segment 413, and a first axial off-center segment 414.

The first axial central segment 412 extends along an axial direction of the valve core 400, and a central axis of the first axial central segment 412 coincides with a central axis of the valve core 400. The first radial segment 413 extends along a radial direction of the valve core 400, one end of the first radial segment 413 is in communication with one end, away from the flow regulating valve 300, of the first axial central segment 412, and another end of the first radial segment 413 penetrates through an outer peripheral surface of the valve core 400. The first axial off-center segment 414 extends along the axial direction of the valve core 400, a central axis of the first axial off-center segment 414 does not coincide with the central axis of the valve core 400, and an end, adjacent to the flow regulating valve 300, of the first axial off-center segment 414 is in communication with the first radial segment 413. In this way, based on a limited volume of the valve core 400, a proper venting channel is provided to switch from a nearly middle position of one end surface to a middle position of another end surface, to form a one-way channel, so that the space utilization rate is high. When the valve core 400 moves to a side of the above-mentioned one end surface, generated gas flows to a side of the above-mentioned another end surface through the first air channel 410.

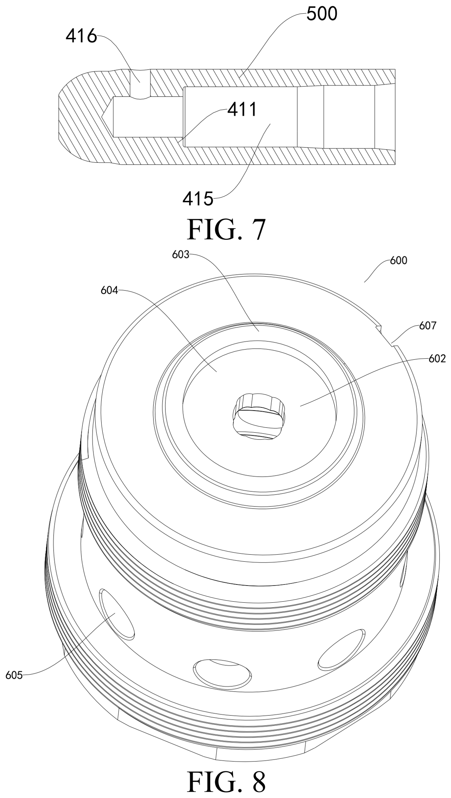

According to some embodiments of the present disclosure, as shown in FIG. 7, the part, configured in the pilot valve 500, of the first air channel 410 includes a second axial central segment 415 and a second radial segment 416.

The second axial central segment 415 extends along an axial direction of the pilot valve 500, a central axis of the second axial central segment 415 coincides with a central axis of the pilot valve 500, and an end, away from the flow regulating valve 300, of the second axial central segment 415 is in communication with the first axial central segment 412. The second radial segment 416 extends along a radial direction of the pilot valve 500, one end of the second radial segment 416 is in communication with an end, adjacent to the flow regulating valve 300, of the second axial central segment 415, and another end of the second radial segment 416 is in communication with the rebound chamber 102.

In this way, on one hand, when the gas flows in the pilot valve 500, the gas first moves along the axial direction of the pilot valve 500, and then flows out of the first air channel 410 from a side wall of the pilot valve 500, and further, because the gas flows out of the first air channel 410 from the side wall of the pilot valve 500, the gas will not be blocked by the flow regulating valve 300, and the gas flows more smoothly.

According to some embodiments of the present disclosure, as shown in FIG. 4 to FIG. 6, the second air channel 420 includes a third axial off-center segment 422, a third radial segment 423, and a third axial central segment 424.

The third axial off-center segment 422 extends along the axial direction of the valve core 400, and a central axis of the third axial off-center segment 422 does not coincide with the central axis of the valve core 400. The third radial segment 423 extends along the radial direction of the valve core 400, one end of the third radial segment 423 is in communication with an end, away from the flow regulating valve 300, of the third axial off-center segment 422, and another end of the third radial segment 423 penetrates through the outer peripheral surface of the valve core 400. The third axial central segment 424 extends along the axial direction of the valve core 400, a central axis of the third axial central segment 424 coincides with the central axis of the valve core 400, and an end, adjacent to the flow regulating valve 300, of the third axial central segment 424 is in communication with the third radial segment 423. In this way, based on the limited volume of the valve core 400, a proper venting channel is provided to switch from a nearly middle position of the above-mentioned another end surface to a middle position of the above-mentioned one end surface, to form another one-way channel, so that the space utilization rate is high. When the valve core 400 moves to a side of the above-mentioned another end surface, generated gas flows to a side of the above-mentioned one end surface through the second air channel 420.

According to some embodiments of the present disclosure, as shown in FIG. 1, the shock absorber 1 further includes a first elastic member 401 and a second elastic member 402. The first elastic member 401 and the second elastic member 402 are arranged on the two sides of the moving direction of the valve core 400, respectively. The first elastic member 401 and the second elastic member 402 jointly apply an elastic force to the valve core 400 to keep a position of the valve core 400 stable.

In this way, under the action of the first elastic member 401 and the second elastic member 402, if the valve core 400 is not exposed to an external force, neither of the two sides of the moving direction of the valve core 400 will be in contact with other objects, so as to prevent the first air channel 410 and the second air channel 420 from being blocked, thereby ensuring smoothness of the gas.

According to some embodiments of the present disclosure, as shown in FIG. 4 to FIG. 6, an end, facing the first elastic member 401, of the valve core 400 is provided with a first ring slot 403. The first elastic member 401 is a spring. The first elastic member 401 is inserted into the first ring slot 403. An end, facing the second elastic member 402, of the valve core 400 is provided with a second ring slot 404. The second elastic member 402 is a spring. The second elastic member 402 is inserted into the second ring slot 404.

By providing the first ring slot 403 and the second ring slot 404, the first elastic member 401, the second elastic member 402, and the valve core 400 can be pre-positioned, and entire volume of the first elastic member 401, the second elastic member 402, and the valve core 400 can be reduced.

According to some embodiments of the present disclosure, as shown in FIG. 6, the first air channel 410 is in communication with the first ring slot 403, and the second ring slot 404 surrounds the first air channel 410 and is separated from the first air channel 410. The second air channel 420 is in communication with the second ring slot 404, and the first ring slot 403 surrounds the second air channel 420 and is separated from the second air channel 420.

The first axial off-center segment 414 is in communication with the first ring slot 403, and the third axial off-center segment 422 is in communication with the second ring slot 404. In this way, the first air channel 410 and the first ring slot 403 have a shared part, and the second air channel 420 and the second ring slot 404 have a shared part, so that machining costs of the valve core 400 can be reduced and production efficiency can be improved.

According to some embodiments of the present disclosure, as shown in FIG. 1, an inner side wall of the second ring slot 404 is sleeved with the pilot valve 500 in a clearance fit manner. In this way, a clearance between the pilot valve 500 and the inner side wall of the second ring slot 404 can absorb an installing error and a machining error to a certain extent, thereby ensuring accuracy of a moving path of the pilot valve 500.

According to some embodiments of the present disclosure, as shown in FIG. 1, the piston 200 includes a piston rod 210 and a piston valve body 220.

The piston valve body 220 divides the interior of the cylinder 100 into the compression chamber 101 and the rebound chamber 102. The piston valve body 220 is connected to the piston rod 210 through a valve body 600. The flow regulating valve 300 is installed in the valve body 600. The pilot valve 500 extends into the valve body 600 to match with the flow regulating valve 300.

For example, an outer peripheral surface of the valve body 600 is sleeved with the piston valve body 220 which is in threaded connection with the outer peripheral surface of the valve body 600, and the outer peripheral surface of the valve body 600 is sleeved with the piston rod 210 which is in threaded connection with the outer peripheral surface of the valve body 600.

By dividing the piston 200 into the piston rod 210 and the piston valve body 220, the flow regulating valve 300, the pilot valve 500, and the valve core 400 can be installed more conveniently. In addition, the piston valve body 220 is connected to the piston rod 210 by the valve body 600, so that disassembling and assembling are convenient.

According to some embodiments of the present disclosure, as shown in FIG. 1, the valve body 600 is provided with a third air channel 601, a side wall of the piston rod 210 is provided with a fourth air channel 211, and the first air channel 410 is in communication with the rebound chamber 102 sequentially through the third air channel 601 and the fourth air channel 211. In this way, when gas exchange is performed between the first air channel 410 and the rebound chamber 102, a flowing path of the gas is clearer, thereby improving flowing efficiency of the gas.

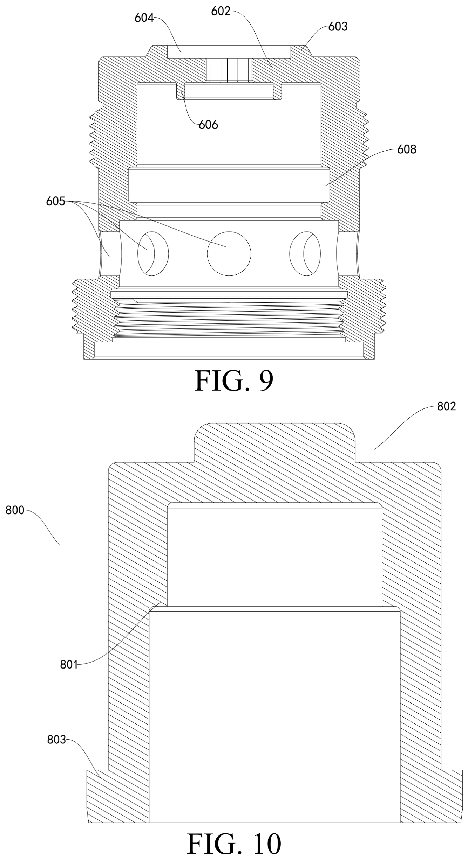

According to some embodiments of the present disclosure, as shown in FIG. 8 and FIG. 9, an inner wall surface of the valve body 600 is provided with a first limiting boss 602. The first limiting boss 602 is located between the flow regulating valve 300 and the valve core 400 and surrounds the pilot valve 500 so as to limit the moving path of the pilot valve 500. At least a part of the third air channel 601 is configured in the first limiting boss 602.

In this way, on one hand, the first limiting boss 602 can limit movement of the pilot valve 500, thereby improving movement precision of the pilot valve 500, and further, a spacing between the first air channel 410 and the third air channel 601 is small, so that flowing of the gas between the first air channel 410 and the third air channel 601 is smoother.

According to some embodiments of the present disclosure, as shown in FIG. 1, FIG. 8, and FIG. 9, the first air channel 410 penetrates through the part, extending into the valve body 600, of the pilot valve 500, one end of the third air channel 601 penetrates through a side surface, facing the flow regulating valve 300, of the first limiting boss 602, and the other end of the third air channel 601 penetrates through an outer side surface of the valve body 600.

In this way, the spacing between the first air channel 410 and the third air channel 601 is smaller, and therefore, flowing of the gas between the first air channel 410 and the third air channel 601 is smoother; and a spacing between the third air channel 601 and the rebound chamber 102 is smaller, and therefore, flowing of the gas between the rebound chamber 102 and the third air channel 601 is smoother.

According to some embodiments of the present disclosure, as shown in FIG. 1, the third air channel 601 and the fourth air channel 211 are arranged in a staggered manner in an axial direction of the piston rod 210. In this way, it may be beneficial to discharge the gas in the piston rod 210 to an exterior of the piston rod 210, so as to prevent the gas from hindering the movement of the valve core 400 in oil.

According to some embodiments of the present disclosure, as shown in FIG. 1, the shock absorber 1 further includes a coil component 700 and a hood body 800.

The coil component 700 is installed in the piston rod 210. The hood body 800 is installed on the coil component 700. The valve core 400 is movably installed in the hood body 800. When the coil component 700 is powered on, the valve core 400 is magnetized and the valve core and the valve body 600 are attracted to each other.

The valve body 600 may be made of a magnetic material, and the valve core 400 may also be made of a magnetic material. For example, the valve body 600 and the valve core 400 may be made of metallic iron. In this way, after the coil component 700 is powered on, the valve core 400 may be magnetized so that the valve core and the valve body 600 are attracted to each other, and therefore the valve core 400 can move to a direction close to the valve body 600.

In addition, the hood body 800 may fix relative positions of the coil component 700 and the valve core 400, and may define the moving direction of the valve core 400. The hood body 800 may be made of a magnetic material. For example, the hood body 800 may be made of metallic iron. In this way, the hood body 800 may also be magnetized under the action of the coil component 700. The hood body 800 is in contact with the valve core 400, and a magnetic force between the valve core 400 and the valve body 600 is higher.

According to some embodiments of the present disclosure, as shown in FIG. 4 and FIG. 10, an inner wall surface of the hood body 800 is provided with a second limiting protrusion 801, an outer wall surface of the valve core 400 is provided with a third limiting boss 405, and the second limiting protrusion 801 and the third limiting boss 405 abut against each other so as to define a farthest position of the valve core 400 relative to the flow regulating valve 300.

In this way, on one hand, positioning accuracy between the hood body 800 and the valve core 400 can be improved, and further, when pressure of the flow regulating valve 300 is excessively large and the pilot valve 500 is jacked up, a distance by which the pilot valve 500 drives the valve core 400 to move is not excessively large, thereby ensuring moving reliability of the valve core 400 during continuous use.

According to some embodiments of the present disclosure, as shown in FIG. 1, the inner wall surface of the hood body 800 and the outer wall surface of the valve core 400 are in clearance fit, so as to limit movement of the valve core 400 along the axial direction of the valve core 400. In this way, it is ensured that when the valve core 400 moves, the flow regulating valve 300 can be accurately controlled by the pilot valve 500, so as to regulate the flow rate of the fluid between the compression chamber 101 and the rebound chamber 102.

According to some embodiments of the present disclosure, as shown in FIG. 1, the shock absorber 1 further includes a magnetic barrier ring 900. The magnetic barrier ring 900 is installed in the piston rod 210. The magnetic barrier ring 900 is located between the hood body 800 and the valve body 600, and separates the coil component 700 and the valve body 600. By providing the magnetic barrier ring 900, when the coil 720 is powered on, a magnetic field generated by the coil 720 can be prevented from affecting the valve body 600, so that the magnetic field generated by the coil 720 mainly acts on the valve core 400, and the magnetic force generated between the valve core 400 and the valve body 600 is greater.

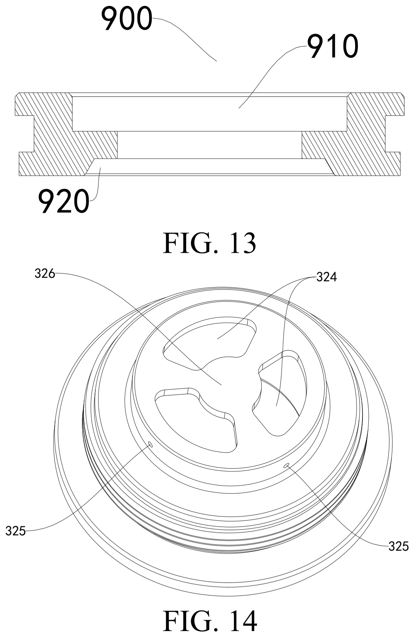

According to some embodiments of the present disclosure, as shown in FIG. 1 and FIG. 13, an end, facing away from the valve body 600, of the magnetic barrier ring 900 is provided with a support slot 910. The support slot 910 penetrates through an inner peripheral surface of the magnetic barrier ring 900. The hood body 800 is matched with the support slot 910. By providing the support slot 910, precise positioning between the magnetic barrier ring 900 and the hood body 800 can be implemented.

According to some embodiments of the present disclosure, as shown in FIG. 1 and FIG. 13, the support slot 910 is in interference fit with the hood body 800. In this way, a matched region of the hood body 800 and the magnetic barrier ring 900 can be sealed, thereby preventing liquid leakage.

According to some embodiments of the present disclosure, as shown in FIG. 1, FIG. 8, FIG. 9, and FIG. 13, an end, facing the valve body 600, of the magnetic barrier ring 900 is provided with a positioning slot 920, the positioning slot 920 penetrates through the inner peripheral surface of the magnetic barrier ring 900, an end, facing the magnetic barrier ring 900, of the valve body 600 is provided with a positioning protrusion 603, and the positioning protrusion 603 is matched with the positioning slot 920. By providing the positioning slot 920, precise positioning between the magnetic barrier ring 900 and the valve body 600 can be implemented. In addition, a space between the magnetic barrier ring 900 and the valve body 600 can be sealed, so as to seal a matched region of the valve body 600 and the magnetic barrier ring 900, thereby preventing liquid leakage.

According to some embodiments of the present disclosure, as shown in FIG. 1, FIG. 8, FIG. 9, and FIG. 13, an outer diameter of a cross section of the positioning protrusion 603 gradually decreases in a direction close to the magnetic barrier ring 900, and a cross-sectional area of the positioning slot 920 gradually decreases in a direction away from the valve body 600. In this way, a guiding effect is achieved between the positioning protrusion 603 and a slot wall of the positioning slot 920, so that it is more convenient to insert the positioning protrusion 603 into the positioning slot 920.

According to some embodiments of the present disclosure, as shown in FIG. 1, a sealing ring 930 is arranged between an outer peripheral surface of the magnetic barrier ring 900 and an inner peripheral surface of the piston rod 210 so as to seal a clearance between the magnetic barrier ring 900 and the piston rod 210. The outer peripheral surface of the magnetic barrier ring 900 may be provided with a groove matched with the sealing ring 930. In this way, a sealing performance between the magnetic barrier ring 900 and the piston rod 210 is better, thereby preventing liquid leakage.

According to some embodiments of the present disclosure, as shown in FIG. 8 and FIG. 9, an end, facing the valve core 400, of the valve body 600 is provided with a limiting slot 604, and the valve core 400 may be inserted into the limiting slot 604.

In this way, the limiting slot 604 can play a limiting role in the movement of the valve core 400, so that in entire movement travel of the valve core 400, the valve core 400 is not deflected, and motion stability is higher. In addition, a moving path of the valve core 400 can be enlarged without the need to enlarge an axis length of the hood body 800, thereby improving compactness of the shock absorber 1, reducing volume of the shock absorber 1, and facilitating miniaturization of the shock absorber 1.

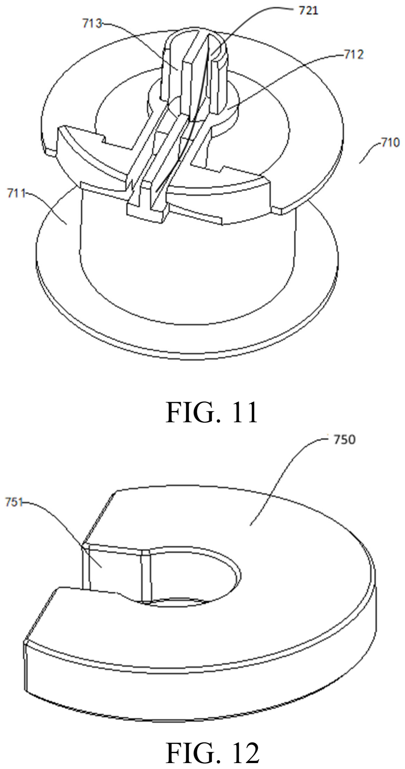

According to some embodiments of the present disclosure, as shown in FIG. 1 and FIG. 11, the coil component 700 includes a holder 710, a coil 720, a guide wire 721, and an insulating cover 740.

The holder 710 sleeves the hood body 800 and an outer side wall is provided with a coil slot 711, an end, facing away from the valve body 600, of the holder 710 is configured with a guide wire table 712, and the guide wire table 712 is configured with a guide wire slot 713. The coil 720 is wound in the coil slot 711. The guide wire 721 is connected to the coil 720, and the guide wire 721 is led out through the guide wire slot 713 from an end, facing away from the valve body 600, of the holder 710. The insulating cover 740 is installed on the guide wire table 712 and seals and covers the guide wire slot 713.

In this way, the holder 710 may be made of an insulating material, and is configured to limit and fix the coil 720 and the guide wire 721. The coil 720 is a copper wire, and the guide wire 721 includes an insulating bush and a metal conductor located in the insulating bush. A more stable and reliable magnetic field can be produced by providing the coil 720. In addition, the coil 720 is connected to an external power supply by the guide wire 721, thereby reducing an electric shock risk, and making the shock absorber 1 have higher safety. By using the insulating cover 740 to seal and cover the guide wire slot 713, the insulating cover 740 and the guide wire table 712 are detachable, so that disassembling and assembling of the guide wire 721 are more convenient while ensuring security.

According to some embodiments of the present disclosure, as shown in FIG. 1 and FIG. 12, the coil component 700 further includes a metal cap 750. The metal cap 750 is installed at an end, facing away from the valve body 600, of the holder 710 and in contact with the hood body 800. The metal cap 750 is configured with a notch 751. The guide wire table 712 is matched with the notch 751. In this way, when the coil 720 is powered on, magnetic lines pass through the metal cap 750, so that the metal cap 750 is magnetized. A magnetic force of the metal cap 750 may be conducted to the valve core 400 through the hood body 800, so that a relatively high magnetic force is formed between the valve core 400 and the valve body 600.

According to some embodiments of the present disclosure, as shown in FIG. 1 and FIG. 10, an end surface of an end, facing away from the valve body 600, of the hood body 800 is provided with a positioning ring slot 802. The positioning ring slot 802 penetrates through an outer peripheral surface of the hood body 800, that is, an outer peripheral side of the positioning ring slot 802 is open. The metal cap 750 is matched with the positioning ring slot 802. In this way, relative positions between the metal cap 750 and the hood body 800 can be fixed, and the metal cap 750 is in contact with the hood body 800, thereby improving installation precision.

According to some embodiments of the present disclosure, as shown in FIG. 1 and FIG. 10, the outer peripheral surface of the hood body 800 is provided with a support protrusion 803, and the support protrusion 803 is supported at an end, facing the valve body 600, of the holder 710. In this way, relative positions between the hood body 800 and the holder 710 can be positioned, thereby improving installing precision.

According to some embodiments of the present disclosure, as shown in FIG. 1 and FIG. 14 to FIG. 19, the flow regulating valve 300 includes an overflow valve body 310 and an overflow valve seat 320.

The overflow valve body 310 is movably installed in the valve body 600. The overflow valve seat 320 is installed in the valve body 600 and located at an end, facing away from the pilot valve 500, of the overflow valve body 310. The overflow valve seat 320 is provided with a first flow channel 321 and a second flow channel 322. Each of the first flow channel 321 and the second flow channel 322 is in communication with the compression chamber 101 and the rebound chamber 102, respectively. A minimum cross-sectional area of the first flow channel 321 is greater than a minimum cross-sectional area of the second flow channel 322. When the valve core 400 moves, the overflow valve body 310 is controlled to move by the pilot valve 500, so that the first flow channel 321 is opened or closed by using the overflow valve body 310.

The flow regulating valve 300 is divided into the overflow valve body 310 and the overflow valve seat 320. Due to the movement of the valve core 400, the overflow valve body 310 can be controlled to open or close the first flow channel 321, so that the compression chamber 101 and the rebound chamber 102 are in communication with each other through both the first flow channel 321 and the second flow channel 322, or the compression chamber 101 and the rebound chamber 102 are in communication with each other through the second flow channel 322 only, so as to change the flow rate of the fluid between the compression chamber 101 and the rebound chamber 102 to balance pressure between the compression chamber 101 and the rebound chamber 102.

According to some embodiments of the present disclosure, as shown in FIG. 14 to FIG. 16, an overflow chamber 323 in communication with the compression chamber 101 is configured in the overflow valve seat 320; an end, facing the overflow valve body 310, of the overflow valve seat 320 is provided with a first through hole 324; a side wall of the overflow valve seat 320 is provided with a second through hole 325; the overflow chamber 323 is in communication with the rebound chamber 102 through the first through hole 324 and the second through hole 325; a cross-sectional area of the first through hole 324 is greater than a cross-sectional area of the second through hole 325; the overflow chamber 323 and the first through hole 324 form the first flow channel 321; and the overflow chamber 323 and the second through hole 325 form the second flow channel 322. The overflow valve body 310 opens or closes the first flow channel 321 by opening or closing the first through hole 324.

In this way, the first flow channel 321 and the second flow channel 322 share the overflow chamber 323, so that machining steps of the overflow valve seat 320 are reduced, and production efficiency of the overflow valve seat 320 is improved. In addition, because the first through hole 324 is configured in an end, facing the overflow valve body 310, of the overflow valve seat 320, it is convenient for the overflow valve body 310 to open or close the first through hole 324.

In addition, the second through hole 325 is configured in a side wall of the overflow valve seat 320. That is, the first through hole 324 and the second through hole 325 are located in different side walls of the overflow valve seat 320. Therefore, when the overflow valve body 310 opens or closes the first through hole 324, the second through hole 325 will not be closed incorrectly, and the second through hole 325 can still perform circulation normally, thereby improving reliability of the second flow channel 322.

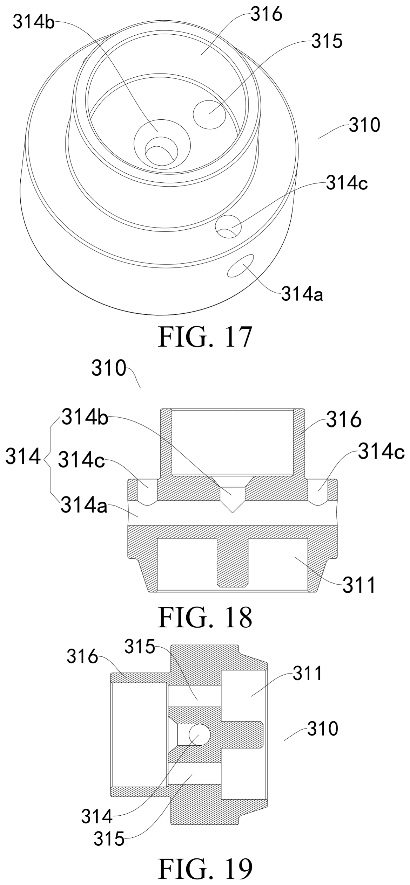

According to some embodiments of the present disclosure, as shown in FIG. 17 to FIG. 19, an end, facing the overflow valve seat 320, of the overflow valve body 310 is provided with a ring slot 311, and an outer peripheral wall of the ring slot 311 is in contact with the overflow valve seat 320 to close the first through hole 324, so as to close the first flow channel 321. The outer peripheral wall of the ring slot 311 is separated from the overflow valve seat 320 to open the first through hole 324, so as to open the first flow channel 321.

By providing the ring slot 311, on one hand, weight and costs of the overflow valve body 310 can be reduced, and when the overflow valve body 310 closes the first through hole 324, because a flow velocity of the second flow channel 322 is relatively small, some of the fluid may be left in the overflow chamber 323. Because the ring slot 311 is in communication with the overflow chamber 323 by the first through hole 324, the ring slot 311 can also store a certain amount of the fluid, so that a total amount of the fluid stored through the flow regulating valve 300 can increase when volume of the overflow valve seat 320 does not increase.

According to some embodiments of the present disclosure, as shown in FIG. 1, FIG. 15, and FIG. 16, the shock absorber 1 further includes a third elastic member 330. An end, facing the overflow valve body 310, of the overflow valve seat 320 is provided with a support portion 326. The third elastic member 330 is a spring sleeving an inner side wall of the ring slot 311. Two ends of the third elastic member 330 abut against the support portion 326 and a bottom wall of the ring slot 311, respectively. The third elastic member 330 provides an elastic force for pushing the outer peripheral wall of the ring slot 311 to separate from the overflow valve seat 320.

In this way, when the coil component 700 is not powered on, the third elastic member 330 may push the overflow valve seat 320 to be separated from the overflow valve body 310, so as to form a clearance between the overflow valve seat 320 and the overflow valve body 310 and ensure communication between the first flow channel 321 and the rebound chamber 102. In addition, because an inner side wall of the ring slot 311 is sleeved with the third elastic member 330, pre-positioning is performed between the third elastic member 330 and the overflow valve body 310, and installation precision is high.

According to some embodiments of the present disclosure, as shown in FIG. 1, FIG. 8, and FIG. 9, a side wall of the valve body 600 is provided with a first through hole 605, and both the first flow channel 321 and the second flow channel 322 are in communication with the rebound chamber 102 through the first through hole 605. In this way, both the overflow valve seat 320 and the overflow valve body 310 may be installed in the valve body 600, to reduce overall volume of the valve body 600, the overflow valve seat 320, and the overflow valve body 310. In addition, by providing the first through hole 605, communication of the first flow channel 321 and the second flow channel 322 with the rebound chamber 102 can be implemented.

According to some embodiments of the present disclosure, as shown in FIG. 1 and FIG. 17 to FIG. 19, a central chamber 312 and a ring chamber 313 are defined between an end, facing away from the overflow valve seat 320, of the overflow valve body 310 and the valve body 600, and the ring chamber 313 is provided around the central chamber 312. The overflow valve body 310 is provided with a third flow channel 314 and a fourth flow channel 315. The third flow channel 314 is in communication with the rebound chamber 102, the ring chamber 313, and the central chamber 312, respectively. The fourth flow channel 315 is in communication with the first flow channel 321 and the central chamber 312, respectively. The pilot valve 500 extends into the central chamber 312 and controls whether the central chamber 312 is in communication with the third flow channel 314.

In this way, when the coil 720 is powered on and the fluid in the rebound chamber 102 flows into the compression chamber 101, the pilot valve 500 abuts against the third flow channel 314 under pushing of the valve core 400, so as to prevent the central chamber 312 from being in communication with the third flow channel 314. The fluid in the third flow channel 314 first flows into the ring chamber 313. When a particular amount of the fluid is stored in the ring chamber 313, it is difficult for the fluid in the third flow channel 314 to continue to flow into the ring chamber 313. As the fluid in the rebound chamber 102 continuously flows to the third flow channel 314, pressure in the third flow channel 314 continuously rises. When the pressure in the third flow channel 314 is greater than the magnetic force between the valve core 400 and the valve body 600, the pilot valve 500 is pushed, so that the central chamber 312 is in communication with the third flow channel 314. The fluid in the third flow channel 314 first flows to the central chamber 312 and then flows from the fourth flow channel 315 into the first flow channel 321. In this case, damping of the shock absorber 1 is reduced.

According to some embodiments of the present disclosure, as shown in FIG. 9 and FIG. 17 to FIG. 19, an end, facing away from the overflow valve seat 320, of the overflow valve body 310 is provided with a first sealing ring table 316, and the valve body 600 is provided with a second sealing ring table 606. One of the first sealing ring table 316 and the second sealing ring table 606 is matched inside another one. The first sealing ring table 316 and the second sealing ring table 606 jointly separate the central chamber 312 and the ring chamber 313.

In this way, the central chamber 312 and the ring chamber 313 are formed by joint separation of the first sealing ring table 316 and the second sealing ring table 606, so that the central chamber 312 and the ring chamber 313 are configured more easily.

According to some embodiments of the present disclosure, as shown in FIG. 17 to FIG. 19, the third flow channel 314 includes a radial flow channel 314a, an axial central flow channel 314b, and an axial off-center flow channel 314c.

The radial flow channel 314a extends along a radial direction of the overflow valve body 310, and the radial flow channel 314a is in communication with the rebound chamber 102. The axial central flow channel 314b extends along an axial direction of the overflow valve body 310, and the radial flow channel 314a is in communication with the central chamber 312 through the axial central flow channel 314b. The axial off-center flow channel 314c extends along the axial direction of the overflow valve body 310, and the radial flow channel 314a is in communication with the ring chamber 313 through the axial off-center flow channel 314c. The pilot valve 500 extends into the central chamber 312 and opens and closes the axial central flow channel 314b.

In this way, the radial flow channel 314a can be very conveniently in communication with both the axial central flow channel 314b and the axial off-center flow channel 314c. The fluid in the radial flow channel 314a flows into the ring chamber 313 through the axial off-center flow channel 314c, and the fluid in the radial flow channel 314a flows into the central chamber 312 through the axial central flow channel 314b. The pilot valve 500 may close the axial central flow channel 314b so as to cut off connection between the third flow channel 314 and the central chamber 312, and the axial central flow channel 314b and the axial off-center flow channel 314c are located on two opposite sides of the first sealing ring table 316.

According to some embodiments of the present disclosure, as shown in FIG. 17 to FIG. 19, the fourth flow channel 315 extends along the axial direction of the valve core 400. The ring chamber 313 may be in communication with the fourth flow channel 315. In this way, not only can the fourth flow channel 315 be in communication with the flow regulating valve 300 and the central chamber 312, but also relatively small length of the fourth flow channel 315 can shorten a flowing path of the fluid between the flow regulating valve 300 and the central chamber 312, and structural strength of the overflow valve body 310 is also ensured.

According to some embodiments of the present disclosure, as shown in FIG. 1 and FIG. 9, a side wall of the valve body 600 is provided with a second through hole 607, and the second through hole 607 is in communication with the rebound chamber 102. An inner peripheral surface of the valve body 600 is provided with a flow channel ring slot 608 in communication with the first through hole 605, an outer peripheral surface of the overflow valve body 310 closes the flow channel ring slot 608, and the third flow channel 314 is in communication with the rebound chamber 102 sequentially through the flow channel ring slot 608 and the second through hole 607.

That is, the flow channel ring slot 608 is in communication with the rebound chamber 102 through the first through hole 605, and when the overflow valve body 310 is installed on the valve body 600, while an angle between the overflow valve body 310 and the valve body 600 does not need to be adjusted, the third flow channel 314 can still be in communication with the flow channel ring slot 608, so that communication is more convenient, and the overflow valve body 310 can seal the flow channel ring slot 608, thereby avoiding liquid leakage.

According to some embodiments of the present disclosure, as shown in FIG. 1, FIG. 20, and FIG. 21, the shock absorber 1 further includes an insert 230, the insert 230 is installed in the piston valve body 220 and located at an end, facing away from the pilot valve 500, of the flow regulating valve 300, the insert 230 is provided with a first insert flow channel 231 and a second insert flow channel 232, and the flow regulating valve 300 is in communication with the compression chamber 101 through the first insert flow channel 231 and the second insert flow channel 232.

When the fluid flows from the flow regulating valve 300 to the compression chamber 101, a maximum flow velocity of the fluid in the first insert flow channel 231 is greater than a maximum flow velocity of the fluid in the second insert flow channel 232. When the fluid flows from the compression chamber 101 to the flow regulating valve 300, the maximum flow velocity of the fluid in the second insert flow channel 232 is greater than the maximum flow velocity of the fluid in the first insert flow channel 231.

By providing the insert 230, a moving direction of the oil in the compression chamber 101 and the rebound chamber 102 is controlled, so that pressure of the oil in the rebound chamber 102 and pressure of the oil in the compression chamber 101 can be balanced.

According to some embodiments of the present disclosure, as shown in FIG. 1, an end, away from the valve body 600, of the piston valve body 220 is provided with a support boss 221. The support boss 221 surrounds an outer side of the first insert flow channel 231 and the second insert flow channel 232. The insert 230 is sandwiched between the support boss 221 and the valve body 600. In this way, the insert 230 does not need to be provided with a connection structure to the piston valve body 220 and the valve body 600, and the insert 230 is sandwiched by the support boss 221 and the valve body 600, so that the support boss 221, the valve body 600, and the insert 230 can be fixed, and disassembling and assembling are convenient.

According to some embodiments of the present disclosure, as shown in FIG. 1, FIG. 20 and FIG. 21, the first insert flow channel 231 includes a first perforation 233 and a first throttling hole 236.

The first perforation 233 penetrates through the insert 230, one end of the first perforation 233 is in communication with the flow regulating valve 300, a side, facing away from the flow regulating valve 300, of the insert 230 is provided with a first convex edge 234, and the first convex edge 234 surrounds the first perforation 233. The first throttling hole 236 is formed in the first convex edge 234, a cross-sectional area of the first perforation 233 is greater than a cross-sectional area of the first throttling hole 236, and another end of the first perforation 233 is in communication with the flow regulating valve 300 through the first throttling hole 236. An end, facing away from the flow regulating valve 300, of the insert 230 is provided with a first spring plate 240, and the first spring plate 240 abuts against the first convex edge 234 and seals and covers the first perforation 233.

For example, a number of first perforations 233 may be provided spaced away along a peripheral direction of the insert 230. The first convex edge 234 may surround the number of first perforations 233 at the same time; and the first convex edge 234 may be provided with a number of first throttling holes 236, and the number of first throttling holes 236 are in communication with the number of first perforations 233.

In this way, when the fluid flows from the flow regulating valve 300 to the compression chamber 101, the fluid first enters the first perforation 233, and then flows from the first throttling hole 236 to the flow regulating valve 300, until a pushing force of the fluid in the first perforation 233 pushes the first spring plate 240 to elastically deform. In this case, the fluid may directly flow to the compression chamber 101 through the first perforation 233, and the flow rate of the fluid between the compression chamber 101 and the flow regulating valve 300 increases. In addition, the fluid may also flow to a second perforation 237 described below through a second throttling hole 239 described below, and then flow from the second perforation 237 to the flow regulating valve 300.

According to some embodiments of the present disclosure, as shown in FIG. 1, the shock absorber 1 further includes a support base 250. The support base 250 is installed at an end, facing away from the flow regulating valve 300, of the insert 230. The first spring plate 240 is sandwiched between the support base 250 and the insert 230. An outer diameter of the support base 250 is smaller than an outer diameter of the first spring plate 240. The support base 250 and the insert 230 may be riveted by a rivet.

In this way, relative positions of the insert 230, the first spring plate 240, and the support base 250 are fixed. In addition, when the fluid flows from the first perforation 233 to the flow regulating valve 300, pressure of the fluid can push the first spring plate 240 to deform. Because an outer diameter of the support base 250 is smaller than an outer diameter of the first spring plate 240, the support base 250 avoids the first spring plate 240. Therefore, the first spring plate 240 has a sufficient deformation space and can deform to open the first perforation 233.

According to some embodiments of the present disclosure, as shown in FIG. 1, a number of first spring plates 240 are sequentially stacked in a thickness direction thereof.

In this way, the number of first spring plates 240 can be entirely deformed only under a larger force. Therefore, the number of first spring plates 240 can support the fluid in the flow regulating valve 300 to prevent the situation that due to the action of the gravity of the fluid in the flow regulating valve 300, the number of first spring plates 240 are prone to deformation, thereby ensuring effective sealing on the first perforation 233 by the first spring plate 240.

According to some embodiments of the present disclosure, as shown in FIG. 1, FIG. 20, and FIG. 21, the second insert flow channel 232 includes: a second perforation 237 and a second throttling hole 239.

The second perforation 237 penetrates through the insert 230, one end of the second perforation 237 is in communication with the compression chamber 101, a side, facing the flow regulating valve 300, of the insert 230 is provided with a second convex edge 238, the second convex edge 238 surrounds the second perforation 237, the second throttling hole 239 is formed in the second convex edge 238, a cross-sectional area of the second perforation 237 is greater than a cross-sectional area of the second throttling hole 239, and another end of the second perforation 237 is in communication with the flow regulating valve 300 through the second throttling hole 239. A side, facing the flow regulating valve 300, of the insert 230 is provided with a second spring plate 260, and the second spring plate 260 abuts against the second convex edge 238 and seals and covers the second perforation 237.

For example, a number of second perforations 237 may be provided spaced away along the peripheral direction of the insert 230. A minimum distance between the second perforation 237 and a central axis of the insert 230 is greater than a minimum distance between the first perforation 233 and the central axis of the insert 230, and a largest distance between the second perforation 237 and the central axis of the insert 230 is greater than a largest distance between the first perforation 233 and the central axis of the insert 230. In addition, a number of second convex edges 238 are provided, and the number of second convex edges 238 surround the number of second perforations 237 in a one-to-one correspondence.

In this way, when the fluid flows from the compression chamber 101 to the flow regulating valve 300, the fluid first enters the second perforation 237, and then flows from the second throttling hole 239 to the flow regulating valve 300, until a pushing force of the fluid in the second perforation 237 pushes the second spring plate 260 to elastically deform. In this case, the fluid may directly flow to the flow regulating valve 300 through the second perforation 237, and the flow rate of the fluid between the compression chamber 101 and the flow regulating valve 300 increases. In addition, the fluid may also flow to the first perforations 233 through all the first throttling holes 236, and then flow from the first perforations 233 to the flow regulating valve 300.

According to some embodiments of the present disclosure, as shown in FIG. 1, the shock absorber 1 further includes a compression valve plate 270 and an adjusting sheet 280. The compression valve plate 270 abuts against an end, facing the insert 230, of the flow regulating valve 300. The adjusting sheet 280 is sandwiched between the compression valve plate 270 and the second spring plate 260. An inner diameter of the adjusting sheet 280 is greater than an inner diameter of the second spring plate 260.

That is, two ends of the compression valve plate 270 abut against the insert 230 and the adjusting sheet 280, respectively, and the flow regulating valve 300, the adjusting sheet 280, the second spring plate 260, and the insert 230 can be in close fit with each other, that is, the second spring plate 260 and the second convex edge 238 are in close fit with each other, thereby ensuring effective sealing on the second perforation 237 by the second spring plate 260. In addition, when the fluid flows from the second perforation 237 to the flow regulating valve 300, the pressure of the fluid can push the second spring plate 260 to deform. Because the inner diameter of the adjusting sheet 280 is greater than the inner diameter of the second spring plate 260, the adjusting sheet 280 avoids the second spring plate 260. Therefore, the second spring plate 260 has a sufficient deformation space and can deform to open the second perforation 237.

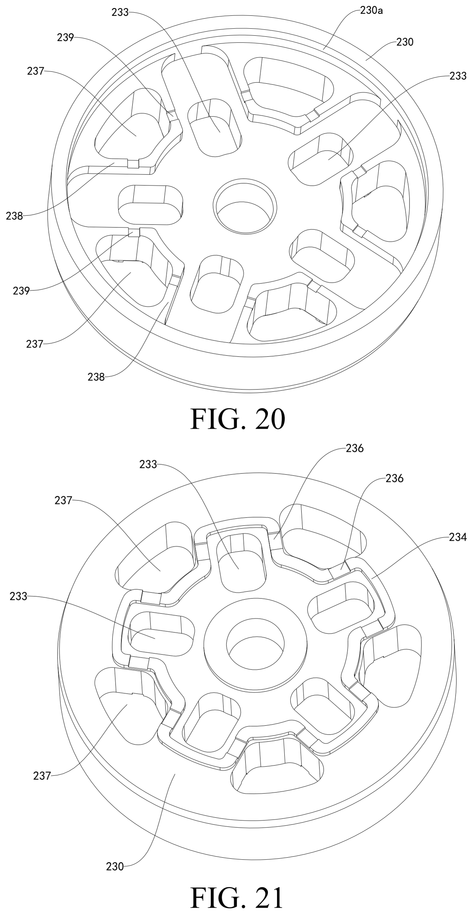

According to some embodiments of the present disclosure, as shown in FIG. 20 and with reference to FIG. 1, an end, facing the flow regulating valve 300, of the insert 230 is provided with a positioning groove 230a, and the second spring plate 260, the adjusting sheet 280, and the compression valve plate 270 are arranged in the positioning groove 230a. By providing the positioning groove 230a, relative positions of the second spring plate 260, the adjusting sheet 280, and the compression valve plate 270 can be fixed, and positioning between the second spring plate 260, the adjusting sheet 280, and the compression valve plate 270, and the insert 230 can be implemented.

According to some embodiments of the present disclosure, as shown in FIG. 1, the shock absorber 1 further includes a bottom valve 130. The cylinder 100 includes an outer cylinder 110 and an inner cylinder 120. The inner cylinder 120 extends into the outer cylinder 110. A liquid storage chamber 103 is formed between the outer cylinder 110 and the inner cylinder 120. The piston 200 is movably arranged in the inner cylinder 120 and divides an interior of the inner cylinder 120 into the compression chamber 101 and the rebound chamber 102. The bottom valve 130 is installed in at least one of the inner cylinder 120 and the outer cylinder 110. The bottom valve 130 is provided with a first one-way flow channel 131 and a second one-way flow channel 132. The fluid in the compression chamber 101 flows into the liquid storage chamber 103 through the first one-way flow channel 131, and the fluid in the liquid storage chamber 103 flows into the compression chamber 101 through the second one-way flow channel 132.

For example, the fluid of a particular pressure, such as oil and an inactive gas, may be stored in the liquid storage chamber 103.

In addition, when the piston 200 moves in a direction away from the bottom valve 130, volume of the compression chamber 101 increases, volume of the rebound chamber 102 decreases, and the fluid in the rebound chamber 102 and the fluid in the liquid storage chamber 103 flow to the compression chamber 101. When the piston 200 moves in a direction close to the bottom valve 130, the volume of the compression chamber 101 decreases, the volume of the rebound chamber 102 increases, and the fluid in the compression chamber 101 flows to the rebound chamber 102 and the liquid storage chamber 103.

In this way, movement resistance of the piston 200 in the shock absorber 1 is smaller, and when the piston 200 moves, the flow rate of the fluid in the shock absorber 1 is larger, which can effectively convert kinetic energy of the piston 200 into thermal energy of the fluid and radiate the thermal energy into the atmosphere.

In addition, by arranging the first one-way flow channel 131 and the second one-way flow channel 132 on the bottom valve 130, not only can circulation of the fluid between the compression chamber 101 and the liquid storage chamber 103 be ensured, but also the fluid can flow in one way only through the first one-way flow channel 131 or the second one-way flow channel 132, so that reliable storage of the fluid in the compression chamber 101 and the liquid storage chamber 103 can be ensured, and the oil pressure of the liquid storage chamber 103 and the compression chamber 101 can be balanced.

According to some embodiments of the present disclosure, as shown in FIG. 1, a sealing sleeve 140 is arranged between an outer peripheral surface of the piston 200 and an inner peripheral surface of the inner cylinder 120. The sealing sleeve 140 may be made of an elastic material such as rubber. A clearance between the outer peripheral surface of the piston 200 and the inner peripheral surface of the inner cylinder 120 may be filled with the sealing sleeve 140 so as to ensure a sealing performance of the rebound chamber 102 and a sealing performance of the compression chamber 101, so that the rebound chamber 102 can be in communication with the compression chamber 101 only by the flow regulating valve 300.

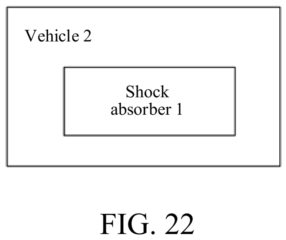

A vehicle 2 according to an embodiment of the present disclosure is described below with reference to FIG. 22. The vehicle 2 includes a shock absorber 1 according to the above embodiment of the present disclosure.

The following uses an example in which the shock absorber 1 is applied to the vehicle 2 to describe a working process of the shock absorber 1 with reference to the accompanying drawing.

The shock absorber 1 may be installed on a wheel axis.

When a vehicle travels on a relatively flat road surface, a coil component 700 may not be powered on. In this case, an overflow valve body 310 and an overflow valve seat 320 are separated. When a vehicle body and wheels relatively vibrate, a piston 200 in the shock absorber 1 moves relative to a cylinder 100. If the piston 200 compresses a compression chamber 101, a fluid in the compression chamber 101 flows into a liquid storage chamber 103 through a bottom valve 130, and flows into a rebound chamber 102 through a first flow channel 321 and a second flow channel 322. In this state, a flow rate of the fluid is relatively large and damping is small, and the shock absorber 1 appears to be "soft".

If the piston 200 compresses the rebound chamber 102, the fluid in the rebound chamber 102 flows into the compression chamber 101 through the first flow channel 321 and the second flow channel 322, and the fluid in the liquid storage chamber 103 flows into the compression chamber 101 through the bottom valve 130. In this state, the flow rate of the fluid is relatively large and the damping is small, and the shock absorber 1 appears to be "soft".

Due to back-and-forth movement of the piston 200, the fluid flows back and forth in the compression chamber 101, the rebound chamber 102, and the liquid storage chamber 103, the flow rate is relatively large, and the damping of the fluid is small. Therefore, when an automobile runs on an uneven road surface, riding comfort is relatively good.

When the vehicle travels on an uneven road surface with potholes, the coil component 700 may be powered on. In this case, the overflow valve body 310 is in contact with the overflow valve seat 320. When the vehicle body and the wheels relatively vibrate, the piston 200 in the shock absorber 1 moves relative to the cylinder 100. If the piston 200 compresses the compression chamber 101, the fluid in the compression chamber 101 flows into the liquid storage chamber 103 through the bottom valve 130, and first flows into the rebound chamber 102 through the second flow channel 322. In this state, the flow rate of the fluid is relatively small and the damping is large. The shock absorber 1 appears to be "stiff", and then a large amount of the fluid is accumulated in an overflow chamber 323 of the overflow valve seat 320, causing pressure in the overflow chamber 323 to increase. When the pressure is greater than a magnetic attraction force between a valve core 400 and a valve body 600, the overflow valve body 310 is separated from the overflow valve seat 320, and the fluid can flow from the first flow channel 321 into the rebound chamber 102. In this state, the flow rate of the fluid is relatively large and the damping is small.

If the piston 200 compresses the rebound chamber 102, the fluid in the liquid storage chamber 103 flows into the compression chamber 101 through the bottom valve 130, and the fluid in the rebound chamber 102 first flows into the compression chamber 101 through the second flow channel 322. In this state, the flow rate of the fluid is relatively small and the damping is large, and the shock absorber 1 appears to be "stiff". Then, the fluid flows into a third flow channel 314 through a second through hole 607 and a flow channel ring slot 608, until pressure in the third flow channel 314 is greater than the magnetic attraction force between the valve core 400 and the valve body 600, a pilot valve 500 is pushed open, so that the third flow channel 314 is in communication with a central chamber 312. The fluid in the third flow channel 314 flows into a fourth flow channel 315 through the central chamber 312, and the damping is reduced. At last, a large amount of the fluid is accumulated in the overflow chamber 323 of the overflow valve seat 320, and the pressure in the overflow chamber 323 increases. When the pressure is greater than the magnetic attraction force between the valve core 400 and the valve body 600, the overflow valve body 310 and the overflow valve seat 320 are separated, and the fluid can flow from the first flow channel 321 to the rebound chamber 102. In this state, the flow rate of the fluid further increases and the damping further decreases.

Due to the back-and-forth movement of the piston 200, the fluid flows back and forth in the compression chamber 101, the rebound chamber 102, and the liquid storage chamber 103, a magnitude of the flow rate repeatedly changes and a magnitude of the damping of the fluid repeatedly changes accordingly, so that the damping is adjustable. For example, when the automobile travels at a high speed, the damping is increased by adjusting the flow rate, thereby improving stability of the vehicle body. When the automobile travels on the uneven road surface, the damping is decreased by adjusting the flow rate, thereby improving riding comfort.

Other compositions and operations of the shock absorber 1 and the vehicle 2 having same according to the embodiments of the present disclosure are known to those of ordinary skill in the art, and are not described herein in detail.

In the description of this specification, the description made with reference to the terms "one embodiment", "some embodiments", "schematic embodiment", "example ", "specific example", or "some examples" means that the specific features, structures, materials, or characteristics described with reference to the embodiment or example are included in at least one embodiment or example of the present disclosure. In this specification, exemplary descriptions of the foregoing terms do not necessarily refer to the same embodiment or example.

Although the embodiments of the present disclosure have been shown and described, those of ordinary skill in the art should understand that various changes, modifications, replacements and variations may be made to the embodiments without departing from the principles and spirit of the present disclosure, and the scope of the present disclosure is defined by the claims and their equivalents.

In the drawings:
Shock absorber 1, vehicle 2,
cylinder 100, compression chamber 101, rebound chamber 102, liquid storage chamber 103, outer cylinder 110, inner cylinder 120, bottom valve 130, first one-way flow channel 131, second one-way flow channel 132, sealing sleeve 140,
piston 200, piston rod 210, fourth air channel 211, piston valve body 220, support boss 221,
insert 230, positioning groove 230a, first insert flow channel 231, second insert flow channel 232, first perforation 233, first convex edge 234, first throttling hole 236, second perforation 237, second convex edge 238, second throttling hole 239,
first spring plate 240, support base 250, second spring plate 260, compression valve plate 270, adjusting sheet 280,
flow regulating valve 300, overflow valve body 310, ring slot 311, central chamber 312, ring chamber 313, third flow channel 314, radial flow channel 314a, axial central flow channel 314b, axial off-center flow channel 314c, fourth flow channel 315, first sealing ring table 316,
overflow valve seat 320, first flow channel 321, second flow channel 322, overflow chamber 323, first through hole 324, second through hole 325, support portion 326, third elastic member 330,
valve core 400, first elastic member 401, second elastic member 402, first ring slot 403, second ring slot 404, third limiting boss 405,
first air channel 410, first support ring table 411, first axial central segment 412, first radial segment 413, first axial off-center segment 414, second axial central segment 415, second radial segment 416,
second air channel 420, second support ring table 421, third axial off-center segment 422, third radial segment 423, third axial central segment 424,
first one-way valve 430, first channel member 431, first channel 431a, first closure member 432, first return elastic member 433, second one-way valve 440, second channel member 441, second channel 441a, second closure member 442, second return elastic member 443,
pilot valve 500
valve body 600, third air channel 601, first limiting boss 602, positioning protrusion 603, limiting slot 604, first through hole 605, second sealing ring table 606, second through hole 607, flow channel ring slot 608,
coil component 700, holder 710, coil slot 711, guide wire table 712, guide wire slot 713, coil 720, insulating cover 740, metal cap 750, notch 751, guide wire 721,
hood body 800, second limiting protrusion 801, positioning ring slot 802, support protrusion 803,
magnetic barrier ring 900, support slot 910, positioning slot 920, and sealing ring 930.

## Claims

1. A shock absorber (1), comprising:
a cylinder (100);
a piston (200), the piston (200) being movably arranged in the cylinder (100), and the piston (200) dividing an interior of the cylinder (100) into a compression chamber (101) and a rebound chamber (102);
a flow regulating valve (300), the flow regulating valve (300) being arranged in the piston (200) and in communication with the compression chamber (101) and the rebound chamber (102), respectively;
a valve core (400), the valve core (400) being movably arranged in the piston (200); and
a pilot valve (500), the pilot valve (500) being connected to the valve core (400), and when the valve core (400) moves, the flow regulating valve (300) being controlled by the pilot valve (500), so as to regulate a flow rate of a fluid between the compression chamber (101) and the rebound chamber (102),
wherein the shock absorber (1) is configured with a first air channel (410) and a second air channel (420), the first air channel (410) is in communication with spaces on two sides of a moving direction of the valve core (400) and in communication with the rebound chamber (102), the second air channel (420) is in communication with the spaces on the two sides of the moving direction of the valve core (400), one part of the first air channel (410) is configured in the valve core (400), another part of the first air channel (410) is configured in the pilot valve (500), and the second air channel (420) is configured in the valve core (400).

2. The shock absorber (1) according to claim 1, further comprising:
a first one-way valve (430), the first one-way valve (430) being arranged in the first air channel (410), allowing gas to flow only from the first air channel (410) to a direction close to the flow regulating valve (300); and
a second one-way valve (440), the second one-way valve (440) being arranged in the second air channel (420), allowing the gas to flow only from the second air channel (420) to a direction away from the flow regulating valve (300).

3. The shock absorber (1) according to claim 2, wherein the first one-way valve (430) comprises:
a first channel member (431), the first channel member (431) being installed in the first air channel (410) and provided with a first channel (431a);
a first closure member (432), the first closure member (432) being movably installed in the first air channel (410) and located at an end, facing the flow regulating valve (300), of the first channel member (431); and
a first return elastic member (433), the first return elastic member (433) being installed in the first air channel (410) and two ends abutting against an inner wall surface of the first air channel (410) and the first closure member (432), respectively, so that the first closure member (432) abuts against the first channel member (431) and closes the first channel (431a).

4. The shock absorber (1) according to claim 3, wherein the inner wall surface of the first air channel (410) is provided with a first support ring table (411), the first support ring table (411) is located at an end of the first closure member (432) facing the flow regulating valve (300), and the two ends of the first return elastic member (433) abut against the first support ring table (411) and the first closure member (432), respectively.

5. The shock absorber (1) according to any one of claims 2 to 4, wherein the second one-way valve (440) comprises:
a second channel member (441), the second channel member (441) being installed in the second air channel (420) and provided with a second channel (441a);
a second closure member (442), the second closure member (442) being movably installed in the second air channel (420) and located at an end, facing the flow regulating valve (300), of the second channel member (441), an inner wall surface of the second air channel (420) being provided with a second support ring table (421), and the second support ring table (421) being located at an end, facing away from the second channel member (441), of the second closure member (442); and
a second return elastic member (443), the second return elastic member (443) being installed in the second air channel (420) and two ends abutting against the second channel member (441) and the second closure member (442), respectively, so that the second closure member (442) abuts against the second support ring table (421) and closes the second air channel (420).

6. The shock absorber (1) according to any one of claims 1 to 5, wherein the part, configured in the valve core (400), of the first air channel (410) comprises:
a first axial central segment (412), the first axial central segment (412) extending along an axial direction of the valve core (400), and a central axis of the first axial central segment (412) coinciding with a central axis of the valve core (400);
a first radial segment (413), the first radial segment (413) extending along a radial direction of the valve core (400), one end of the first radial segment (413) being in communication with an end, away from the flow regulating valve (300), of the first axial central segment (412), and another end of the first radial segment (413) penetrating through an outer peripheral surface of the valve core (400); and
a first axial off-center segment (414), the first axial off-center segment (414) extending along the axial direction of the valve core (400), a central axis of the first axial off-center segment (414) not coinciding with the central axis of the valve core (400), and an end, adjacent to the flow regulating valve (300), of the first axial off-center segment (414) being in communication with the first radial segment (413).

7. The shock absorber (1) according to claim 6, wherein the part, configured in the pilot valve (500), of the first air channel (410) comprises:
a second axial central segment (415), the second axial central segment (415) extending along an axial direction of the pilot valve (500), a central axis of the second axial central segment (415) coinciding with a central axis of the pilot valve (500), and an end, away from the flow regulating valve (300), of the axial central segment being in communication with the first axial central segment (412); and
a second radial segment (416), the second radial segment (416) extending along a radial direction of the pilot valve (500), one end of the second radial segment (416) being in communication with an end, adjacent to the flow regulating valve (300), of the second axial central segment (415), and another end of the second radial segment (416) being in communication with the rebound chamber (102).

8. The shock absorber (1) according to any one of claims 1-7, wherein the second air channel (420) comprises:
a third axial off-center segment (422), the third axial off-center segment (422) extending along the axial direction of the valve core (400), and a central axis of the third axial off-center segment (422) not coinciding with the central axis of the valve core (400);
a third radial segment (423), the third radial segment (423) extending along the radial direction of the valve core (400), one end of the third radial segment (423) being in communication with an end, away from the flow regulating valve (300), of the third axial off-center segment (422), and another end of the third radial segment (423) penetrating through the outer peripheral surface of the valve core (400); and
a third axial central segment (424), the third axial central segment (424) extending along the axial direction of the valve core (400), a central axis of the third axial central segment (424) coinciding with the central axis of the valve core (400), and an end, adjacent to the flow regulating valve (300), of the third axial central segment (424) being in communication with the third radial segment (423).

9. The shock absorber (1) according to any one of claims 1-8, further comprising:
a first elastic member (401); and
a second elastic member (402), the first elastic member (401) and the second elastic member (402) being arranged on the two sides of the moving direction of the valve core (400), respectively, and the first elastic member (401) and the second elastic member (402) jointly applying an elastic force to the valve core (400) to keep a position of the valve core (400) stable.

10. The shock absorber (1) according to claim 9, wherein an end, facing the first elastic member (401), of the valve core (400) is provided with a first ring slot (403), the first elastic member (401) is a spring, and the first elastic member (401) is inserted into the first ring slot (403); and
an end, facing the second elastic member (402), of the valve core (400) is provided with a second ring slot (404), the second elastic member (402) is a spring, and the second elastic member (402) is inserted into the second ring slot (404).

11. The shock absorber (1) according to claim 10, wherein the first air channel (410) is in communication with the first ring slot (403), and the second ring slot (404) surrounds the first air channel (410) and is separated from the first air channel (410); and
the second air channel (420) is in communication with the second ring slot (404), and the first ring slot (403) surrounds the second air channel (420) and is separated from the second air channel (420).

12. The shock absorber (1) according to any one of claims 1-11, wherein the piston (200) comprises:
a piston rod (210); and
a piston valve body (220), the piston valve body (220) dividing the interior of the cylinder (100) into the compression chamber (101) and the rebound chamber (102),
wherein the piston valve body (220) is connected to the piston rod (210) through a valve body (600), the flow regulating valve (300) is installed in the valve body (600), and the pilot valve (500) extends into the valve body (600) to match with the flow regulating valve (300).

13. The shock absorber (1) according to claim 12, wherein the valve body (600) is provided with a third air channel (601), a side wall of the piston rod (210) is provided with a fourth air channel (211), and the first air channel (410) is in communication with the rebound chamber (102) sequentially through the third air channel (601) and the fourth air channel (211).

14. The shock absorber (1) according to claim 13, wherein an inner wall surface of the valve body (600) is provided with a first limiting boss (602), the first limiting boss (602) is located between the flow regulating valve (300) and the valve core (400) and surrounds the pilot valve (500) so as to limit a moving path of the pilot valve (500), and at least a part of the third air channel (601) is configured in the first limiting boss (602).

15. The shock absorber (1) according to claim 14, wherein the first air channel (410) penetrates through the part, extending into the valve body (600), of the pilot valve (500), one end of the third air channel (601) penetrates through a side surface, facing the flow regulating valve (300), of the first limiting boss (602), and another end of the third air channel (601) penetrates through an outer side surface of the valve body (600).

16. The shock absorber (1) according to any one of claims 12-14, further comprising:
a coil component (700), the coil component (700) being installed in the piston rod (210); and
a hood body (800), the hood body (800) being installed on the coil component (700), and the valve core (400) being movably installed in the hood body (800),
wherein when the coil component (700) is powered on, the valve core (400) is magnetized and the valve core and the valve body (600) are attracted to each other.

17. The shock absorber (1) according to claim 16, wherein an inner wall surface of the hood body (800) is provided with a second limiting protrusion (801), an outer wall surface of the valve core (400) is provided with a third limiting boss (405), and the second limiting protrusion (801) and the third limiting boss (405) abut against each other so as to limit a farthest position of the valve core (400) relative to the flow regulating valve (300).

18. The shock absorber (1) according to claim 16 or 17, further comprising:
a magnetic barrier ring (900), the magnetic barrier ring (900) being installed in the piston rod (210), and the magnetic barrier ring (900) being located between the hood body (800) and the valve body (600) and separating the coil component (700) and the valve body (600).

19. The shock absorber (1) according to claim 18, wherein an end, facing the valve body (600), of the magnetic barrier ring (900) is provided with a positioning slot (920), the positioning slot (920) penetrates through an inner peripheral surface of the magnetic barrier ring (900), an end, facing the magnetic barrier ring (900), of the valve body (600) is provided with a positioning protrusion (603), the positioning protrusion (603) is matched with the positioning slot (920), an outer diameter of a cross section of the positioning protrusion (603) gradually decreases in a direction close to the magnetic barrier ring (900), and a cross-sectional area of the positioning slot (920) gradually decreases in a direction away from the valve body (600).

20. The shock absorber (1) according to any one of claims 16-18, wherein the coil component (700) comprises:
a holder (710), the holder (710) sleeving the hood body (800), an outer side wall of the holder being provided with a coil slot (711), an end, facing away from the valve body (600), of the holder (710) being configured with a guide wire table (712), and the guide wire table (712) being configured with a guide wire slot (713);
a coil (720), the coil (720) being wound in the coil slot (711);
a guide wire (721), the guide wire (721) being connected to the coil (720), and the guide wire (721) being led out, through the guide wire slot (713), from an end, facing away from the valve body (600), of the holder (710); and
an insulating cover (740), the insulating cover (740) being installed on the guide wire table (712) and sealing and covering the guide wire slot (713).

21. The shock absorber (1) according to claim 20, wherein the coil component (700) further comprises:
a metal cap (750), the metal cap (750) being installed at an end, facing away from the valve body (600), of the holder (710) and in contact with the hood body (800), the metal cap (750) being configured with a notch (751), and the guide wire table (712) being matched with the notch (751).

22. The shock absorber (1) according to any one of claims 12-21, wherein the flow regulating valve (300) comprises:
an overflow valve body (310), the overflow valve body (310) being movably installed in the valve body (600); and
an overflow valve seat (320), the overflow valve seat (320) being installed in the valve body (600) and located at an end, facing away from the pilot valve (500), of the overflow valve body (310), the overflow valve seat (320) being provided with a first flow channel (321) and a second flow channel (322), each of the first flow channel (321) and the second flow channel (322) being in communication with the compression chamber (101) and the rebound chamber (102), respectively, and a minimum cross-sectional area of the first flow channel (321) being greater than a minimum cross-sectional area of the second flow channel (322),
wherein when the valve core (400) moves, movement of the overflow valve body (310) is controlled by the pilot valve (500), so that the first flow channel (321) is opened or closed by using the overflow valve body (310).

23. The shock absorber (1) according to claim 22, wherein an overflow chamber (323) in communication with the compression chamber (101) is configured in the overflow valve seat (320), an end, facing the overflow valve body (310), of the overflow valve seat (320) is provided with a first through hole (324), a side wall of the overflow valve seat (320) is provided with a second through hole (325), the overflow chamber (323) is in communication with the rebound chamber (102) through the first through hole (324) and the second through hole (325), a cross-sectional area of the first through hole (324) is greater than a cross-sectional area of the second through hole (325), the overflow chamber (323) and the first through hole (324) form the first flow channel (321), and the overflow chamber (323) and the second through hole (325) form the second flow channel (322),
wherein the overflow valve body (310) opens or closes the first flow channel (321) by opening or closing the first through hole (324).

24. The shock absorber (1) according to claim 22 or 23, wherein an end, facing the overflow valve seat (320), of the overflow valve body (310) is provided with a ring slot (311), an outer peripheral wall of the ring slot (311) closes the first flow channel (321) through contact with the overflow valve seat (320), and the outer peripheral wall of the ring slot (311) opens the first flow channel (321) through separation from the overflow valve seat (320).

25. The shock absorber (1) according to claim 24, further comprising:
a third elastic member (330), an end, facing the overflow valve body (310), of the overflow valve seat (320) being provided with a support portion (326), the third elastic member (330) being a spring sleeving an inner side wall of the ring slot (311), two ends of the third elastic member (330) abutting against the support portion (326) and a bottom wall of the ring slot (311), respectively, and the third elastic member (330) providing an elastic force for pushing the outer peripheral wall of the ring slot (311) to separate from the overflow valve seat (320).

26. The shock absorber (1) according to any one of claims 22-25, wherein a central chamber (312) and a ring chamber (313) are defined between an end, facing away from the overflow valve seat (320), of the overflow valve body (310) and the valve body (600), and the ring chamber (313) is provided around the central chamber (312);
the overflow valve body (310) is provided with a third flow channel (314) and a fourth flow channel (315), the third flow channel (314) is in communication with the rebound chamber (102), the ring chamber (313), and the central chamber (312), respectively, and the fourth flow channel (315) is in communication with the first flow channel (321) and the central chamber (312), respectively; and
the pilot valve (500) extends into the central chamber (312) and controls whether the central chamber (312) is in communication with the third flow channel (314).

27. The shock absorber (1) according to claim 26, wherein an end, facing away from the overflow valve seat (320), of the overflow valve body (310) is provided with a first sealing ring table (316), the valve body (600) is provided with a second sealing ring table (606), one of the first sealing ring table (316) and the second sealing ring table (606) is matched inside another one, and the first sealing ring table (316) and the second sealing ring table (606) jointly separate the central chamber (312) and the ring chamber (313).

28. The shock absorber (1) according to claim 26 or 27, wherein the third flow channel (314) comprises:
a radial flow channel (314a), the radial flow channel (314a) extending along a radial direction of the overflow valve body (310), and the radial flow channel (314a) being in communication with the rebound chamber (102);
an axial central flow channel (314b), the axial central flow channel (314b) extending along an axial direction of the overflow valve body (310), and the radial flow channel (314a) being in communication with the central chamber (312) through the axial central flow channel (314b); and
an axial off-center flow channel (314c), the axial off-center flow channel (314c) extending along the axial direction of the overflow valve body (310), and the radial flow channel (314a) being in communication with the ring chamber (313) through the axial off-center flow channel (314c),
wherein the pilot valve (500) extends into the central chamber (312) and opens and closes the axial central flow channel (314b).

29. The shock absorber (1) according to any one of claims 26-28, wherein a side wall of the valve body (600) is provided with a second through hole (607), the second through hole (607) is in communication with the rebound chamber (102), an inner peripheral surface of the valve body (600) is provided with a flow channel ring slot (608) in communication with a first through hole (605), the flow channel ring slot (608) is closed by an outer peripheral surface of the overflow valve body (310), and the third flow channel (314) is in communication with the rebound chamber (102) sequentially through the flow channel ring slot (608) and the second through hole (607).

30. The shock absorber (1) according to any one of claims 12-29, further comprising:
an insert (230), the insert (230) being installed in the piston valve body (220), and located at an end, facing away from the pilot valve (500), of the flow regulating valve (300), the insert (230) being provided with a first insert flow channel (231) and a second insert flow channel (232), and the flow regulating valve (300) being in communication with the compression chamber (101) through the first insert flow channel (231) and the second insert flow channel (232),
wherein when the fluid flows from the flow regulating valve (300) to the compression chamber (101), a maximum flow velocity of the fluid in the first insert flow channel (231) is greater than a maximum flow velocity of the fluid in the second insert flow channel (232); and
when the fluid flows from the compression chamber (101) to the flow regulating valve (300), the maximum flow velocity of the fluid in the second insert flow channel (232) is greater than the maximum flow velocity of the fluid in the first insert flow channel (231).

31. The shock absorber (1) according to claim 30, wherein the first insert flow channel (231) comprises:
a first perforation (233), the first perforation (233) penetrating through the insert (230), and one end of the first perforation (233) being in communication with the flow regulating valve (300); and
a first throttling hole (236), a side, facing away from the flow regulating valve (300), of the insert (230) being provided with a first convex edge (234), the first convex edge (234) surrounding the first perforation (233), the first throttling hole (236) being formed in the first convex edge (234), a cross-sectional area of the first perforation (233) being greater than a cross-sectional area of the first throttling hole (236), and another end of the first perforation (233) being in communication with the flow regulating valve (300) through the first throttling hole (236),
wherein an end, facing away from the flow regulating valve (300), of the insert (230) is provided with a first spring plate (240), and the first spring plate (240) abuts against the first convex edge (234) and seals and covers the first perforation (233).

32. The shock absorber (1) according to claim 30 or 31, wherein the second insert flow channel (232) comprises:
a second perforation (237), the second perforation (237) penetrating through the insert (230), and one end of the second perforation (237) being in communication with the compression chamber (101); and
a second throttling hole (239), a side, facing the flow regulating valve (300), of the insert (230) being provided with a second convex edge (238), the second convex edge (238) surrounding the second perforation (237), the second throttling hole (239) being formed in the second convex edge (238), a cross-sectional area of the second perforation (237) being greater than a cross-sectional area of the second throttling hole (239), and another end of the second perforation (237) being in communication with the flow regulating valve (300) through the second throttling hole (239),
wherein a side, facing the flow regulating valve (300), of the insert (230) is provided with a second spring plate (260), and the second spring plate (260) abuts against the second convex edge (238) and seals and covers the second perforation (237).

33. The shock absorber (1) according to claim 32, further comprising:
a compression valve plate (270), the compression valve plate (270) abutting against an end, facing the insert (230), of the flow regulating valve (300); and
an adjusting sheet (280), the adjusting sheet (280) being sandwiched between the compression valve plate (270) and the second spring plate (260), and an inner diameter of the adjusting sheet (280) being greater than an inner diameter of the second spring plate (260).

34. The shock absorber (1) according to any one of claims 1-32, further comprising:
a bottom valve (130), the cylinder (100) comprising an outer cylinder (110) and an inner cylinder (120), the inner cylinder (120) extending into the outer cylinder (110), a liquid storage chamber (103) being formed between the outer cylinder (110) and the inner cylinder (120), the piston (200) being movably arranged in the inner cylinder (120) and dividing an interior of the inner cylinder (120) into the compression chamber (101) and the rebound chamber (102), the bottom valve (130) being installed in at least one of the inner cylinder (120) and the outer cylinder (110), and the bottom valve (130) being provided with a first one-way flow channel (131) and a second one-way flow channel (132),
wherein the fluid in the compression chamber (101) flows into the liquid storage chamber (103) through the first one-way flow channel (131), and the fluid in the liquid storage chamber (103) flows into the compression chamber (101) through the second one-way flow channel (132).

35. A vehicle (2), comprising the shock absorber (1) according to any one of claims 1-34.
